# FASCICULE DE BREVET EUROPEEN

(11) **EP 1 242 429 B1**
(45) Date de publication et mention de la délivrance du brevet: **02.07.2003**
(21) Numéro de dépôt: 00993713.7
(22) Date de dépôt: 22.12.2000
(51) Int. Cl.: C07F 7/18, C08K 5/544, C08K 5/5455

(54) **COMPOSES A BASE DE SILANES FONCTIONNALISES, LEURS PROCEDES DE PREPARATION ET LEUR UTILISATION DANS LE DOMAINE DES MATERIAUX EN CAOUTCHOUC**
VERBINDUNGEN BASIEREND AUF FUNKTIONALISIERTEN SILANEN, IHRE HERSTELLUNG UND IHRE VERWENDUNG IM GEBIET DER KAUTSCHUK-MATERIALIEN
FUNCTIONALISED SILANE-BASED COMPOUNDS, METHODS FOR PRODUCING THEM AND THEIR USE IN THE AREA OF RUBBER MATERIALS

(30) Priorité: 30.12.1999 FR 9916710; 16.06.2000 FR 0007701
(43) Date de publication de la demande: 25.09.2002
(73) Titulaire: RHODIA CHIMIE, 92512 Boulogne Billancourt Cedex (FR)
(72) Inventeur: BARRUEL, Pierre, F-69160 Tassin La Demi-Lune (FR); BOURGEOIS, Elisabeth, F-69100 Villeurbanne (FR); GUENNOUNI, Nathalie, F-69540 Irigny (FR); LUCIANI, Pierre, F-69005 Lyon (FR); MIGNANI, Gérard, F-69008 Lyon (FR); PARISOT, Hervé, F-69300 Caluire (FR)
(74) Mandataire: Trolliet, Maurice
(86) Numéro de dépôt international: FR0003666
(87) Numéro de publication internationale: WO01049694

(56) Documents cités:
- GB-A- 1 439 247
- LAI, YU-CHIN ET AL: "Novel silicone hydrogels based on fumarate-capped prepolymers of polydimethylsiloxane" POLYM. MATER. SCI. ENG., vol. 76, 1997, pages 38-39, XP000939082

## Description

La présente invention concerne de nouveaux composés à base de silanes fonctionnalisés, leurs procédés de préparation et leur utilisation comme agent de couplage charge blanche - élastomère dans les compositions de caoutchouc comprenant une charge blanche, notamment une matière siliceuse, à titre de charge renforçante.

Les composés à base de silanes fonctionnalisés, auxquels on s'intéresse dans le cadre du premier objet de l'invention, sont des composés constitués essentiellement d'organosilanes porteurs chacun d'une fonction ester-maléamique ou d'une fonction ester-fumaramique. Ces fonctions, qui comprennent une double liaison éthylénique activée par des groupes CO situés en α et β de la double liaison, confèrent aux composés organosilanes des propriétés spécifiques qui permettent de les utiliser avantageusement comme agent de couplage charge-blanche-élastomère dans les compositions de caoutchouc comprenant une charge blanche à titre de charge renforçante.

Plus précisément, la présente invention vise dans son premier objet des composés constitués essentiellement d'un organosilane fonctionnalisé de formule : 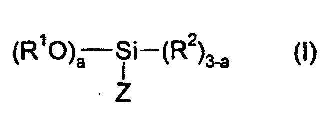 dans laquelle :
- les symboles R¹ identiques ou différents représentent chacun un groupe hydrocarboné monovalent choisi parmi : un radical alkyle, linéaire ou ramifié, ayant de 1 à 4 atomes de carbone ; un radical alkoxyalkyle, linéaire ou ramifié, ayant de 2 à 6 atomes de carbone ; un radical cycloalkyle ayant de 5 à 8 atomes de carbone ; et un radical phényle ;
- les symboles R² identiques ou différents représentent chacun un groupe hydrocarboné monovalent choisi parmi : un radical alkyle, linéaire ou ramifié, ayant de 1 à 6 atomes de carbone ; un radical cycloalkyle ayant de 5 à 8 atomes de carbone ; et un radical phényle ;
- Z est une fonction, comprenant une double liaison éthylénique activée, choisie parmi :
   ■ une fonction ester-maléamique Z² de formule : 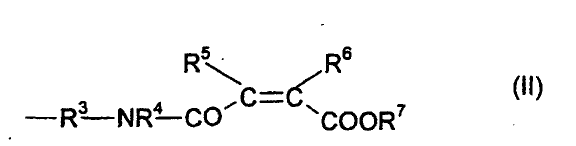
   ■ et une fonction ester-fumaramique Z³ de formule : 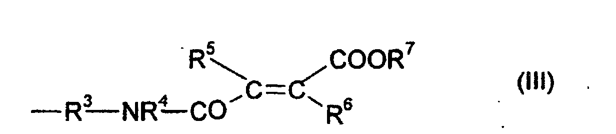
   formules dans lesquelles :
   + R³ est un radical hydrocarboné divalent alkylène, linéaire ou ramifié, ayant de 1 à 10 atomes de carbone, pouvant être interrompu par au moins un hétéroatome oxygéné, dont la valence libre portée par un atome de carbone est reliée à l'atome de Si ;
   + les symboles R⁴, R⁵ et R⁶, identiques ou différents entre eux, représentent chacun un atome d'hydrogène ou un groupe hydrocarboné monovalent choisi parmi : un radical alkyle, linéaire ou ramifié, ayant de 1 à 6 atomes de carbone ; et un radical phényle ;
   + R⁷ est un groupe hydrocarboné monovalent choisi parmi : un radical alkyle, linéaire ou ramifié, ayant de 1 à 6 atomes de carbone ; et un radical phényle ;
- a est un nombre choisi parmi 1, 2 et 3.

Comme indiqué ci-avant, la présente invention, prise dans son premier objet, concerne des composés constitués essentiellement d'un organosilane fonctionnalisé de formule (I). L'expression "essentiellement" doit être interprétée comme signifiant que l'organosilane fonctionnalisé entrant dans le cadre de la présente invention peut se présenter sous forme d'un organosilane fonctionnalisé de formule (I) à l'état pur ou sous forme d'un mélange de pareil organosilane avec une quantité molaire variable, généralement égale ou inférieure à 40 % molaire dans le mélange, d'autre(s) composé(s) organosilicique(s) comprenant :
■ en quantité généralement égale ou inférieure à 10 % molaire : l'organosilane fonctionnalisé de formule (I) qui est l'isomère de l'organosilane, principalement obtenu, c'est-à-dire l'organosilane trans de formule (I) où Z est la fonction Z³ de formule (III), quand l'organosilane principalement obtenu est l'organosilane cis de formule (I) où Z est la fonction Z² de formule (II) et inversement ; et/ou
■ en quantité généralement égale ou inférieure à 30 % molaire : au moins un oligomère siloxane linéaire, cyclique et/ou en réseau formé de motifs répondant aux formules suivantes : (R⁸)₂ZSiO_{1/2} (IV-1), R⁸ZSiO_{2/2} (IV-2) et/ou ZSiO_{3/2} (IV-3), dans lesquelles : les symboles R⁸ identiques ou différents représentent chacun un radical monovalent choisi parmi le radical hydroxyle et/ou les radicaux répondant aux définitions de OR¹ et R² ; les symboles R¹, R² et Z sont tels que définis supra ; et le nombre total de motifs de formules (IV-1) à (IV-3), par molécule d'oligomère, est un nombre entier ou fractionnaire supérieur à 1, allant de préférence de 2 à une valeur inférieure à 3. La quantité molaire dont on parle ci-avant est exprimée en nombre d'atomes de Si (ou de motifs organosiliciques) appartenant à l' (aux) autre(s) composé(s) organosilicique(s) pour 100 atomes de Si présents dans le mélange total. A la connaissance de la Demanderesse, pareils oligomères siloxanes sont des produits nouveaux qui vont constituer un autre aspect de la présente invention prise dans son premier objet.

La quantité du (ou des) autre(s) composé(s) organosilicique(s) va varier essentiellement en fonction des conditions opératoires servant à la réalisation des procédés utilisables pour la préparation de l'organosilane fonctionnalisé de formule (I). Lorsque l'on est conduit à un mélange de produits, si l'on souhaite pouvoir disposer d'un organosilane fonctionnalisé de formule (I) purifié ou à l'état pur, on procédera à une purification, par exemple par distillation sous pression réduite ou par chromatographie en phase liquide.

Dans les formules précédentes, les radicaux R¹ préférés sont choisis parmi les radicaux : méthyle, éthyle,n-propyle, isopropyle, n-butyle, CH₃OCH₂-, CH₃OCH₂CH₂-, CH₃OCH(CH₃)CH₂- ; de manière plus préférée, les radicaux R¹ sont choisis parmi les radicaux : méthyle, éthyle, n-propyle et isopropyle. Les radicaux R² préférés sont choisis parmi les radicaux : méthyle, éthyle, n-propyle, isopropyle, n-butyle, n-pentyle, cyclohexyle et phényle ; de manière plus préférée, les radicaux R² sont des méthyles.

Les fonctions représentées par le symbole Z sont choisies de manière préférentielle parmi les fonctions de formules (II) et (III) dans lesquelles :
- le symbole R³ représente un reste alkylène qui répond aux formules suivantes : -(CH₂)₂-, -(CH₂)₃-, -(CH₂)₄-, -CH₂-CH(CH₃)-, -(CH₂)₂-CH(CH₃)-(CH₂)- , -(CH₂)₃-O-(CH₂)₃-, -(CH₂)₃-O-CH₂-CH(CH₃)-CH₂- ; de manière plus préférée, R³ est un reste -(CH₂)₂- ou -(CH₂)₃- ;
- les symboles R⁴, R⁵ et R⁶ sont choisis parmi : un atome d'hydrogène, et les radicaux méthyle; éthyle, n-propyle, n-butyle ; de manière plus préférée, ces symboles sont choisis parmi un atome d'hydrogène et un radical méthyle ;
- le symbole R⁷ est choisi parmi les radicaux méthyle, éthyle, n-propyle et isopropyle ; de manière plus préférée R⁷ est un méthyle.

Des organosilanes fonctionnalisés typiques répondant à la formule (I), sont ceux de formule : 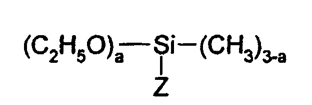 où :
- a est un nombre égal à 2 ou 3,
- le symbole Z répond aux formules (II) et (III) suivantes :

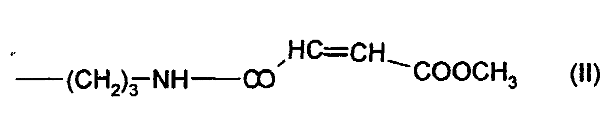

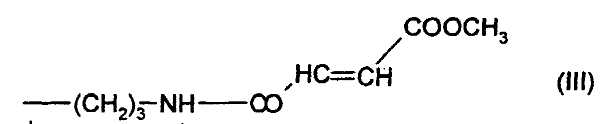

Il convient de noter que des composés polysiloxanes-fumarates ont déjà été décrits dans la littérature, en l'occurrence par Lai et coll. dans *Polym. Mater. Sci. Eng., vol. 76, 1997, pages 38-39* sous forme de prépolymères de type polydiméthylsiloxanes portant des fonctions fumarates terminales.

Les composés selon l'invention, constitués essentiellement d'organosilanes fonctionnalisés de formule (I) peuvent être préparés, et ceci constitue le second objet de la présente invention, en appliquant différents procédés de synthèse.

Selon un premier procédé, les composés selon l'invention peuvent être préparés par estérification du dérivé acide maléamique intermédiaire en réalisant les étapes suivantes : (1) réaction de couplage entre un silane aminé 1 et l'anhydride maléique 2, puis (2) réaction d'estérification du dérivé de l'acide maléamique formé 3 pour conduire au composé constitué essentiellement de l'organosilane fonctionnalisé souhaité 4, en appliquant le schéma de synthèse suivant :

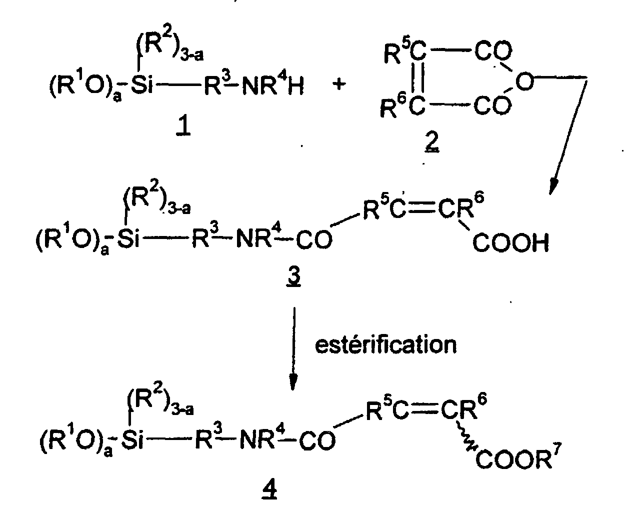

En ce qui concerne la manière pratique de mettre en oeuvre les étapes (1) et (2), on se reportera pour plus de détails aux contenus des documents suivants qui décrivent, éventuellement au départ d'autres réactifs, des modes opératoires applicables à la conduite des différentes étapes du procédé considéré :
- pour l'étape (1) : cf. notamment lzvestiya Akademii Nauk SSSR, 11, pages 2538-2543, 1970 ;
- pour l'étape (2) où plusieurs modes opératoires sont applicables :
   (i) réaction du sel d'ammonium de l'acide carboxylique avec un agent comme le sulfate organique de formule (R⁷)₂SO₄ ou l'iodure organique de formule R⁷I : cf. notamment Can. J. Chem., 65, 1987, pages 2179-2181 et Tetrahedron Letters n°9, pages 689-692, 1973 ;
   (2i) réaction du chlorure de l'acide carboxylique avec l'alcool de formule R⁷OH en présence d'une base aminée : cf. notamment Heterocycles, 39, 2, 1994, pages 767-778 et J. Org. Chem., 26, 1961, pages 697-700 ;
   (3i) réaction de transestérification en présence d'un ester tel que le formiate de formule H-COOR⁷ : cf. notamment Justus Liebigs Ann. Chem., 640, 1961, pages 142-144 et J. Chem. Soc., 1950, pages 3375-3377 ;
   (4i) réaction de méthylation par le diazométhane qui permet de préparer aisément l'ester méthylique : cf. notamment Justus Liebigs Ann. Chem., 488, 1931, pages 211-227 ;
   (5i) réaction d'esthérification directe par l'alcool R⁷-OH : cf. notamment Org. Syn. Coll., vol 1, pages 237 et 451, 1941 et J. Org. Chem., 52, 1987, page 4689.

Selon un second procédé, qui correspond à une voie de synthèse préférée, les composés selon l'invention peuvent être préparés par formation d'une fonction amide en additionnant un silane aminé 1 sur un dérivé ester activé 6 obtenu à partir d'un mono-ester de l'acide maléique 5, en réalisant les étapes suivantes : (1) alcoolyse de l'anhydride maléique 2 par l'alcool R⁷-OH, (2) activation de la fonction acide carboxylique du mono-ester de l'acide maléique 5 obtenu, en utilisant les diverses méthodes d'activation décrites dans le domaine de la synthèse peptidique, pour conduire au dérivé ester activé 6, puis (3) addition du silane aminé 1 sur ledit dérivé ester activé 6 pour conduire au composé constitué essentiellement de l'organosilane fonctionalisé souhaité 4, en appliquant le schéma de synthèse suivant : 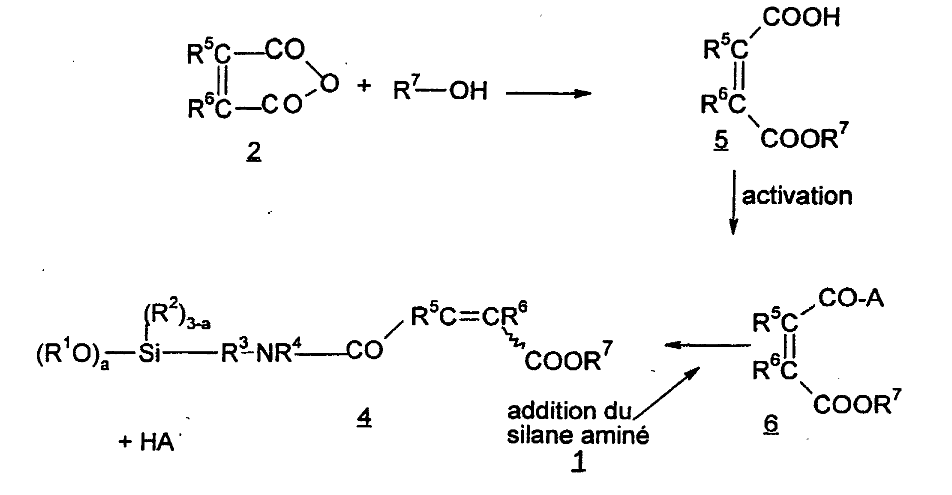 où le symbole A du dérivé 6 représente une fonction activante.

En ce qui concerne la manière pratique de mettre en oeuvre les étapes (1) à (3), on se reportera pour plus de détails aux contenus des documents suivants qui décrivent, éventuellement au départ d'autres réactifs, des modes opératoires applicables à la conduite des différentes étapes du procédé considéré :
- pour l'étape (1) : cf. notamment J. Med. Chem., 1983, 26, pages 174-181 ;
- pour les étapes (2) et (3) : cf. John JONES, Amino Acid and Peptide-Synthesis, pages 25-41, Oxford University Press, 1994.

Afin de permettre l'addition de la fonction amine sur la fonction acide carboxylique du mono-ester de l'acide maléique 5, il convient au préalable de procéder à l'activation de ladite fonction acide carboxylique et cette activation peut se faire en particulier en mettant en oeuvre les méthodes suivantes :
(j) activation par réaction avec un alkylchloroformiate, selon le schéma : 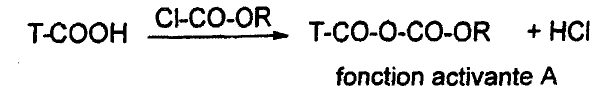 où T représente le reste -R⁵C=CR⁶-COOR⁷ et R représente un radical alkyle linéaire ayant par exemple 1 à 3 atomes de carbone ;
(2j) activation par réaction avec le dicyclohexylcarbodiimide (DCCI) en présence de préférence de N-hydroxysuccinimide (HO-SN), selon le schéma : 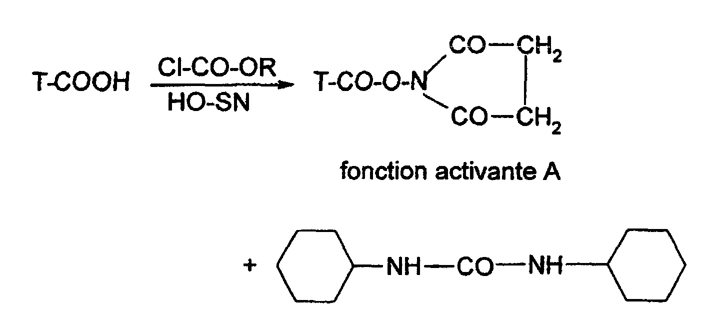
(3j) activation par réaction avec un composé chloré comme par exemple le chlorure de thionyle, le pentachlorure de phosphore, selon le schéma :

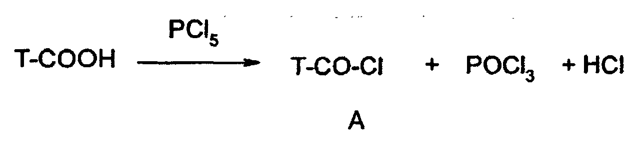

Les méthodes d'activation (j) et (2j) sont spécialement préférées.

Comme exemples concrets d'organoaminosilanes 1 peuvent être cités ceux de formules données ci-après :
(C₂H₅O)₂CH₃Si(CH₂)₃NH₂
(C₂H₅O)₃Si(CH₂)₃NH₂
(CH₃O)₂CH₃Si(CH₂)₃NH₂
(CH₃O)₃Si(CH₂)₃NH₂
(CH₃O)₃Si(CH₂)₄NH₂
(C₂H₅O)₃Si(CH₂)₄NH₂
(CH₃O)₂CH₃SiCH₂CH₂CH(CH₃)CH₂NH₂
(CH₃O)₃Si(CH₂)₃O(CH2)₃NH₂.

Selon le troisième de ses objets, la présente invention concerne encore l'utilisation d'une quantité efficace d'au moins un composé constitué essentiellement d'un organosilane fonctionnalisé de formule (I) comme agent de couplage charge blanche-élastomère dans les compositions d'élastomère(s) de type caoutchouc, naturel(s) ou synthétique(s), comprenant une charge blanche, notamment une matière siliceuse, à titre de charge renforçante, qui sont destinées à la fabrication d'articles en élastomère(s).

Les types d'articles en élastomère(s), où l'invention est la plus utile, sont ceux sujets notamment aux contraintes suivantes : des variations de températures et/ou des variations de sollicitation de fréquence importante en régime dynamique ; et/ou une contrainte statique importante ; et/ou une fatigue en flexion importante en régime dynamique. Des types d'articles sont par exempte : des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des câbles, des gaines de câbles, des semelles de chaussures et des galets pour téléphériques.

Le domaine de l'invention est celui d'une utilisation performante capable de procurer des compositions d'élastomère(s) qui présentent notamment : pour une grande facilité de mise en oeuvre des mélanges crus préparés, en particulier au niveau des opérations d'extrusion et de calandrage, des propriétés rhéologiques marquées par des valeurs de viscosité les plus faibles possibles ; pour atteindre une excellente productivité de l'installation de vulcanisation, des temps de vulcanisation les plus courts possibles ; et pour répondre aux contraintes d'utilisations dont on a parlé ci-avant, d'excellentes propriétés de renforcement conférées par une charge, en particulier des valeurs optimales de module d'élasticité en traction, de résistance à la rupture en traction et de résistance à l'abrasion.

Pour atteindre un tel objectif, de nombreuses solutions ont été proposées qui se sont essentiellement concentrées sur l'utilisation d'élastomère(s) modifiés avec une charge blanche, notamment de la silice, comme charge renforçante. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude d'une part à s'incorporer dans la matrice lors du mélange avec le (ou les) élastomère(s) et à se désagglomérer, et à d'autre part à se disperser de façon homogène dans la matrice élastomère. L'usage de charge blanche renforçante seule, notamment de silice renforçante seule, s'est révélé inapproprié en raison du faible niveau de certaines propriétés de telles compositions et par voie de conséquence de certaines propriétés des articles mettant en oeuvre ces compositions.

Pour des raisons d'affinités réciproques, les particules de charge blanche, notamment de silice, ont une fâcheuse tendance, dans la matrice élastomère, à s'agglomérer entre elles. Ces interactions charge/charge ont pour conséquence néfaste de limiter les propriétés de renforcement à un niveau sensiblement inférieur à celui qu'il serait théoriquement possible d'atteindre si toutes les liaisons charge blanche-élastomère susceptibles d'être créées pendant l'opération de mélange, étaient effectivement obtenues.

De surcroît, l'usage de la charge blanche soulève des difficultés de mise en oeuvre dues aux interactions charge/charge qui tendent à l'état cru à augmenter la viscosité des compositions élastomères, en tout cas à rendre la mise en oeuvre plus difficile.

Il est connu de l'homme de l'art qu'il est nécessaire d'utiliser un agent de couplage encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de "couplage" (charge blanche-élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée "Y-B-X", dans laquelle :
- Y représente un groupe fonctionnel (fonction "Y") qui est capable de se lier physiquement et/ou chimiquement à la charge blanche, une telle liaison pouvant être établie, par exemple, entre un atome de silicium de ragent de couplage et les groupes hydroxyle (OH) de surface de la charge blanche (par exemple les silanols de surface lorsqu'il s'agit de silice) ;
- X représente un groupe fonctionnel (fonction "X") capable de se lier physiquement et/ou chimiquement à l'élastomère, par exemple par l'intermédiaire d'un atome de soufre ;
- B représente un groupe hydrocarboné permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère.

Des agents de couplage, notamment silice-élastomère, ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour augmenter l'affinite de la silice avec la matrice élastomère. Il a été mis en évidence et il est aujourd'hui bien connu que les mercaptosilanes, et en particulier le γ-mercaptopropyltriéthoxysilane, sont susceptibles de procurer d'excellentes propriétés decouplage silice-élastomère, mais que l'utilisation industrielle de ces agents de couplage n'est pas possible en raison de la forte réactivité des fonctions -SH conduisant très rapidement au cours de la préparation de la composition d'élastomère(s) de type caoutchouc dans un mélangeur interne à des réactions de réticulation pendant le mélageage, appelées encore "grillage" ("scorching"), à des viscosités élevées, en fin de compte à des compositions quasiment impossibles à travailler et à mettre en oeuvre industriellement. Pour illustrer cette impossibilité d'utiliser industriellement de tels agents de couplage et les compositions de caoutchouc les contenant, on peut citer les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-trialkoxyl (C₁-C₄)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Parmi ces polysulfures, on citera notamment le tétrasulfure de bis 3-triéthoxysilylpropyle (en abrégé TESPT) qui est généralement considéré aujourd'hui comme le produit apportant, pour des vulcanisats chargés à la silice, le meilleur compromis en terme de sécurité au grillage, de facilité de mise en oeuvre et de pouvoir renforçant, mais dont l'inconvénient connu est d'être fort onéreux (voir par exemple brevets US-A-5 652 310, US-A-5 684 171, US-A-5 684 172).

Au vu de l'état antérieur de la technique, il apparaît donc qu'il existe un besoin non satisfait en des utilisations performantes d'agents de couplage à base de silanes fonctionnalisés dans des compositions d'élastomère(s) comprenant une matière siliceuse comme charge renforçante ou plus généralement comprenant une charge blanche renforçante.

La Demanderesse a découvert lors de ses recherches que, de manière inattendue, de nouveaux agents de couplage à base d'organoxysilanes porteurs d'une double liaison éthylénique activée particulière, présente sous la forme d'une fonction ester-maléamique ou d'une fonction ester-fumaramique, offrent des performances de couplage au moins équivalentes à celles liées à l'utilisation des alkoxysilanes polysulfurés, notamment le TESPT et évitent par ailleurs les problèmes de grillage prématuré ainsi que les problèmes de mise en oeuvre liés à une viscosité trop importante des compositions d'élastomère(s) à l'état cru, propres notamment aux mercaptosilanes.

Plus précisément, la présente invention, prise dans son troisième objet, concerne l'utilisation d'une quantité efficace d'au moins un composé constitué essentiellement d'un organosilane fonctionnalisé de formule (I), obtenu par l'un ou l'autre des procédés également décrits ci-avant, comme agent de couplage charge blanche-élastomère dans les compositions d'élastomère(s) naturel(s) et/ou synthétique(s) comprenant une charge blanche à titre de charge renforçante, qui sont destinées à la fabrication d'articles en élastomère(s).

Dans le cadre de cette application agent de couplage, la présente invention concerne encore les compositions d'élastomère(s) comprenant une charge blanche renforçante obtenues grâce à l'emploi d'une quantité efficace d'au moins un composé constitué essentiellement d'un organosilane fonctionnalisé de formule (I).

Plus précisément, ces compositions comprennent (les parties sont données en poids) :
- pour 100 parties d'élastomère(s),
- 10 à 150 parties de charge blanche renforçante, de préférence 20 à 100 et plus préférentiellement encore 30 à 80 parties,
- 0,5 à 20 parties, de préférence 1 à 15 parties et plus préférentiellement encore 3 à 12 parties de composé constitué essentiellement d'un organosilane de formule (I), pour 100 parties charge blanche renforçante.

Dans le présent mémoire, on entend définir par l'expression "charge blanche renforçante", une charge blanche capable de renforcer à elle seule, sans autre moyen que celui d'un agent de couplage, une composition d'élastomère(s) de type caoutchouc, naturels(s) ou synthétique(s).

L'état physique sous lequel se présente la charge blanche renforçante est indifférent, c'est-à-dire que ladite charge peut se présenter sous forme de poudre, de microperles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre dans l'invention conviennent toutes les silices précipitées ou pyrogénées connues de l'homme de l'art présentant une surface spécifique BET ≤ à 450 m²/g. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 m²/g et particulièrement celles décrites dans le brevet US-A-5 403 570 et les demandes de brevets WO-A-95/09127 et WO-A-95/09128. Conviennent aussi les silices précipitées traitées telles que par exemple les silices "dopées" à l'aluminium décrite dans la demande de brevet EP-A-0 735 088.

A titre plus préférentiel, conviennent bien les silices de précipitation ayant :
- une surface spécifique CTAB allant de 100 à 240 m²/g, de préférence de 100 à 180 m²/g,
- une surface spécifique BET allant de 100 à 250 m²/g, de préférence de 100 à 190 m²/g,
- une prise d'huile DOP inférieure à 300ml/100 g, de préférence allant de 200 à 295 ml/100 g,
- un rapport spécifique BET/surface spécifique CTAB allant de 1,0 à 1,6.

Bien entendu par silice, on entend également des coupages de différentes silices. La surface spécifique CTAB est déterminée selon la méthode NFT 45007 de novembre 1987. La surface spécifique BET est déterminée selon la méthode de BRUNAUER, EMMET, TELLER décrite dans "The Journal of the American Chemical Society, vol. 80, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :
- une surface spécifique BET allant de 30 à 400 m²/g, de préférence de 80 à 250 m²/g,
- une taille moyenne de particules au plus égale à 500 nm, de préférence au plus égale à 200 nm, et
- un taux élevé de fonctions réactives de surface AI-OH,
telle que décrite dans le document EP-A-0 810 258.

Comme exemples non limitatifs de pareilles alumines renforçantes, on citera notamment les alumines A125, CR125, D65CR de la société BAÏKOWSKI.

L'agent de couplage précédemment décrit pourrait être préalablement greffé (via la fonction "Y") sur la charge blanche renforçante, la charge ainsi "précouplée" pouvant être liée ultérieurement à l'élastomère, par l'intermédiaire de la fonction libre "X".

Par élastomères susceptibles d'être mis en oeuvre pour les compositions conformes au troisième objet de l'invention, on entend :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
   - les monomères vinyles aromatiques ayant de 8 à 20 atomes de carbone, comme par exemple: le styrène, l'ortho-, méta- ou paraméthylstyrène, le mélange commercial "vinyl-toluène", le paratertiobutylstyrène,- les méthoxystyrènes, les chlorostyrènes, le vinylmésitylène, le divinylbenzène, le vinyinaphtalène ;
   - les monomères nitriles vinyliques ayant de 3 à 12 atomes de carbone, comme par exemple l'acrylonitrile, le méthacrylonitrile ;
   - les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   les copolymères peuvent contenir entre 99 % et 20 % en poids d'unités diéniques et entre 1 % et 80 % en poids d'unités vinyles aromatiques, nitriles vinyliques et/ou esters acryliques;
(3) les copolymères obtenus par copolymérisation d'éthylène, avec une α-oléfine ayant de 3 à 6 atomes de carbone, comme par exemple les élastomères obtenus à partir d'éthylène et de propylène (élastomères EPR) ;
(4) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène (élastomère EPDM) ;
(5) le caoutchouc naturel ;
(6) les copolymères obtenus par copolymérisation d'isobutène et d'isoprène (caoutchouc butyle), ainsi que les versions halogénées, en particulier chlorées ou bromée, de ces copolymères ;
(7) un mélange de plusieurs des élastomères précités (1) à (6) entre eux ;
(8) les polyéthylènes chlorosulfonés ;
(9) les hydrocarbures fluorés ;
(10) les élastomères du type épichlorohydrine-oxyde d'éthylène ou polyépichlorohydrine.

A titre préférentiel, on fait appel à un ou plusieurs élastomère(s) choisi(s) parmi : (1) le polyisoprène [ou poly(méthyl-2 butadiène-1,3)] ; (2) le poly(isoprène-butadiène), le poly(isoprène-styrène), le poly(isoprène-butadiène-styrène); (5) le caoutchouc naturel ; (6) le caoutchouc butyle ; (7) un mélange des élastomères nommément précités (1), (2), (5), (6) entre eux ; (7') un mélange contenant une quantité majoritaire (allant de 51 % à 99,5 % et, de préférence, de 70 % à 99 % en poids) de polyisoprène (1) et/ou de caoutchouc naturel (5) et une quantité minoritaire (allant de 49 % à 0,5 % et, de préférence, de 30 % à 1 % en poids) de polybutadiène, de polychloroprène, de poly(butadiène-styrène) et/ou de poly(butadiène-acrylonitrile).

Les compositions conformes à l'invention peuvent contenir en outre, et il s'agit là d'une mesure préférentielle, au moins un activateur de couplage, apte à activer c'est-à-dire à augmenter la fonction de couplage de l'agent de couplage décrit précédemment ; cet activateur de couplage, utilisé en très faible proportion (de 0,05 à 1 partie pour 100 parties en poids d'élastomère(s)), est un initiateur radicalaire (encore appelé amorceur radicalaire) du type à amorçage thermique.

De manière connue, un initiateur radicalaire est un composé organique susceptible, suite à une activation énergétique, de générer des radicaux libres *in situ*, dans son milieu environnant. L'initiateur radicalaire qui peut être introduit dans les compositions de l'invention est un initiateur du type à amorçage thermique, c'est-à-dire que l'apport d'énergie, pour la création des radicaux libres doit se faire sous forme thermique. On pense que la génération de ces radicaux libres peut favoriser, lors de la fabrication (malaxage thermomécanique) des compositions de caoutchouc, une meilleure interaction entre l'agent de couplage et l'élastomère diénique.

On choisit de préférence un initiateur radicalaire dont la température de décomposition est inférieure à 180°C, plus préférentiellement inférieure à 160°C, de telles gammes de températures permettant de bénéficier pleinement de l'effet d'activation du couplage, lors de la fabrication des compositions conformes à l'invention.

L'activateur de couplage, quand on en utilise un, est choisi de préférence dans le groupe constitué par les péroxydes, les hydropéroxydes, les composés azido, les composés bis(azo), les peracides, les peresters ou un mélange de deux ou de plus de deux de ces composés.

Plus préférentiellement, l'activateur de couplage, quand on en utilise un, est choisi dans le groupe constitué par les péroxydes, les composés bis(azo), les peresters ou un mélange de deux ou de plus de deux de ces composés. A titre d'exemples, on citera notamment le péroxyde de benzoyle, le péroxyde d'acétyle, le péroxyde de lauryle, le péroxyde de cumyle, le peroxyde de t-butyle, le peracétate de *t*-butyle, l'hydropéroxyde de *t*-butyle, l'hydropéroxyde de cumène, le péroxyde de *t*-butyl cumyle, le peroxyde de 2,5-diméthyl-2,5-bis(t-butyl) 3-hexyne, le peroxyde de 1,3-bis (*t*-butyl-isopropyl) benzène, le péroxyde de 2,4-dichlorobenzoyle, le perbenzoate de t-butyle, le péroxyde de 1,1 bis(t-butyl)-3,3,5-triméthylcyclohexane, le 1,1'-azobis(isobutyronitrile) (en abrégé "AIBN"), le 1,1'-azobis(secpentylnitrile), le 1,1'-azobis(cyclohexanecarbonitrile).

Selon un mode particulièrement préférentiel, l'initiateur radicalaire, quand on en utilise un, est le péroxyde de 1,1 bis(t-butyl)-3,3,5-triméthylcyclohexane.

Un tel composé est commercialisé, par exemple par !a société Flexsys sous la dénomination Trigonox 29-40® (40% en poids de péroxyde sur un support solide de carbonate de calcium).

Selon un autre mode particulièrement préférentiel, l'initiateur radicalaire, quand on en utilise un, est le 1,1'-azobis(isobutyronitrile).

Un tel composé est commercialisé par exemple par la société Du Pont de Nemours sous la dénomination Vazo 64®.

Comme indiqué précédemment, l'initiateur radicalaire, quand on en utilise un, est employé en très faible proportion dans les compositions conformes à l'invention, à savoir à un taux allant de 0,05 à 1 partie, de préférence de 0,05 à 0,5 partie, et plus préférentiellement encore de 0,1 à 0,3 partie, pour 100 parties d'élastomère(s).

Bien entendu, le besoin d'utiliser un activateur de couplage ainsi que la teneur optimale en activateur de couplage quand on en utilise un seront déterminés en fonction des conditions particulières de réalisation de l'invention, à savoir du type d'élastomère(s), de la nature de la charge blanche renforçante, et de la nature et de la quantité d'agent de couplage utilisé. De préférence, la quantité de l'activateur de couplage, quand on en utilise un, représente entre 1% et 10%, plus préférentiellement entre 2% et 6% en poids par rapport à la quantité de l'agent de couplage.

Les compositions conformes à l'invention contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
- s'agissant du système de vulcanisation, on citera par exemple :
   - des agents de vulcanisation choisis parmi le soufre ou des composés donneurs de soufre, comme par exemple des dérivés de thiurame ;
   - des accélérateurs de vulcanisation, comme par exemple des dérivés de guanidine, des dérivés de thiazoles ou des dérivés de suifénamides ;
   - des activateurs de vulcanisation comme, par exemple l'oxyde de zinc, l'acide stérarique et le stéarate de zinc ;
- s'agissant d'autre(s) additif(s), on citera par exemple :
   - une charge renforçante conventionnelle comme le noir de carbone (dans ce cas, la charge blanche renforçante mise en oeuvre constitue plus de 50 % du poids de l'ensemble charge blanche renforçante + noir de carbone) ;
   - une charge blanche conventionnelle peu ou non renforçante comme par exemple des argiles, la bentonite, le talc, la craie, le kaolin, le dioxyde de titane ou un mélange de ces espèces ;
   - des agents antioxydants ;
   - des agents antiozonants, comme par exemple la N-phényl-N'-(diméthyl-1,3 butyl)-p-phénylène-diamine ;
   - des agents de plastification et des agents d'aide à la mise en oeuvre.

S'agissant des agents d'aide à la mise en oeuvre, les compositions conformes à l'invention peuvent contenir des agents de recouvrement de la charge renforçante comportant par exemple la seule fonction Y, susceptibles de manière connue, grâce à une amélioration de la dispersion de la charge dans la matrice de caoutchouc et à un abaissement de la viscosité des compositions, d'améliorer la faculté de mise en oeuvre des compositions à l'état cru. Pareils agents consistent par exemple dans des polyols, des polyéthers (par exemple des polyéthylèneglycols), des amines primaires, secondaires ou tertiaires (par exemple des trialcanol-amines), et des polydiméthylsiloxanes α,ω-dihydroxylés, Un pareil agent d'aide à la mise en oeuvre, quand on en utilise un, est employé à raison de 1 à 10 parties en poids, et de préférence 2 à 8 parties, pour 100 parties de charge blanche renforçante.

Le procédé de préparation des compositions d'élastomère(s) comprenant une charge blanche renforçante et une quantité efficace d'agent de couplage peut se faire selon un mode opératoire classique en une ou deux étapes.

Selon le procédé en une étape, on introduit et malaxe dans un mélangeur interne usuel, par exemple de type BANBURY ou de type BRABENDER, tous les constituants nécessaires à l'exception du (ou des) agent(s) de vulcanisation et éventuellement : du (ou des) accélérateurs de vulcanisation et/ou du (ou des) activateur(s) de vulcanisation. Le résultat de cette première étape de mélange est repris ensuite sur un mélangeur externe, généralement un mélangeur à cylindres, et on y ajoute alors le (ou les) agent(s) de vulcanisation et éventuellement : le (ou les) accélérateur(s) de vulcanisation et/ou le (ou les) activateur(s) de vulcanisation.

Il peut être avantageux pour la préparation de certains articles de mettre en oeuvre un procédé en deux étapes conduites toutes les deux dans un mélangeur interne. Dans la première étape, sont introduits et malaxés tous les constituants nécessaires à l'exception du (ou des) agent(s) de vulcanisation et éventuellement : du (ou des) accélérateur(s) de vulcanisation et/ou du (ou des) activateurs de vulcanisation. Le but de la seconde étape qui suit est essentiellement de faire subir au mélange un traitement thermique complémentaire. Le résultat de cette seconde étape est repris également ensuite sur un mélangeur externe pour y ajouter le (ou les) agent(s) de vulcanisation et éventuellement : le (ou les) accélérateur(s) de vulcanisation, et/ou le (ou les) activateurs de vulcanisation.

La phase de travail en mélangeur interne est opérée généralement à une température allant de 80°C à 200°C, de préférence de 80°C à 180°C. Cette première phase de travail est suivie de la seconde phase de travail en mélangeur externe en opérant à une température plus basse, généralement inférieure à 120°C et de préférence allant de 25°C à 70°C.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130°C à 200°C, pendant un temps suffisant qui peut varier par exemple entre 5 et 90 minutes en fonction notamment de la température de cuisson, du système de vulcanisation adopté et de la cinétique de vulcanisation de la composition considérée.

Il va de soi que la présente invention, prise dans son troisième objet, concerne les compositions d'élastomère(s) précédemment décrites tant à l'état cru (i.e., avant cuisson) qu'à l'état cuit (i.e., après réticulation ou vulcanisation).

Les compositions d'élastomère(s) vont servir à préparer des articles en élastomère(s) possédant un corps comprenant lesdites compositions. Ces compositions sont particulièrement utiles pour préparer des articles consistant dans des supports de moteurs, des semelles de chaussures, des galets de téléphérique, des joints d'appareillages électroménagers et des gaines de câbles.

Les exemples suivants illustrent la présente invention.

### EXEMPLE 1

Cet exemple décrit la préparation d'un composé constitué essentiellement d'un alkoxysilane de formule (I) comportant une fonction ester-maléamique, en mettant en oeuvre la voie de synthèse passant par l'intermédiaire d'un dérivé ester activé (second procédé selon l'invention).

### 1) Alcoolyse de l'anhydride maléique :

Dans un réacteur tétracol de 2 litres, l'anhydride maléique est introduit (698,1 g, soit 7,12 moles), puis il est fondu par chauffage du réacteur à l'aide d'un bain d'huile porté à 70°C. Une fois la totalité de l'anhydride fondue, on introduit, sous agitation, du méthanol (221,4 g, soit 6,92 moles) via une ampoule de coulée. Le milieu est ensuite laissé sous agitation pendant 20 heures à 23°C, puis il est dévolatilisé en établissant une pression réduite de 10.10²Pa pendant 1 heure, et enfin il est filtré sur papier-filtre. On récupère ainsi 786,9 g de monométhylester de l'acide maléique de formule (rendement de 86 %) :

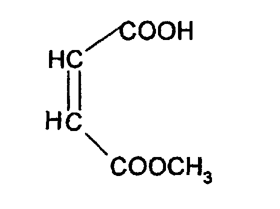

### Préparation du dérivé ester activé, puis couplage avec le silane aminé :

Dans un réacteur tricol de 2 litres, équipé d'une agitation mécanique, d'un réfrigérant et placé sous atmosphère d'argon, le monométhylester de l'acide maléique (219,7 g, soit 1,685 moles) est introduit et dissout dans le dichlorométhane CH₂Cl₂ (950 g). Le milieu réactionnel est refroidit à - 60°C, puis de la N-méthylmorpholine (187,58 g, soit 1,854 moles) est ajoutée progressivement sur une période de 4 minutes. Au bout de ce temps, en opérant à cette même température de - 60°C, on coule progessivement de l'éthylchloroformiate Cl-CO-OC₂H₅ (201,21 g, soit 1,854 moles) sur une période de 10 minutes.

Le milieu réactionnel ainsi obtenu, qui renferme le dérivé ester activé de formule: 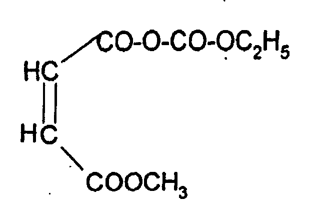 est abandonné pendant 10 minutes à la température où il se trouve.

Ensuite, le silane aminé de formule (C₂H₅O)₂CH₃Si(CH₂)₃NH₂ (322,43 g, soit 1,685 moles) est coulé progressivement en 15 minutes via une ampoule de coulée. Le mélange réactionnel est laissé sous agitation en laissant la température de la masse remonter doucement vers la température ambiante de 23°C. Une fois arrivé à température ambiante, le milieu est encore agité pendant 2 heures à cette température, puis il est filtré sur verve-fritté et le solvant est finalement éliminé par évaporation.

Le composé résiduel obtenu est ensuite purifié par chromatographie sur gel de silice en utilisant comme éluant un mélange heptane / acétate d'éthyle, 50/50 en volume ; l'éluant est ensuite éliminé par évaporation.

Le composé purifié obtenu a été soumis à des analyses par RMN du proton et par RMN du silicium (²⁹Si). Les résultats de ces analyses révèlent que le composé obtenu renferme (les pourcentages molaires indiqués ci-après expriment le nombre de motifs organosiliciques pour 100 atomes de silicium présents dans le composé obtenu) :
- 81,9 % molaire de motif codé D(OC₂H₅)₂ de formule CH₃ZSi(OC₂H₅)₂ appartenant au silane à fonction ester-maléamique de formule (présent à raison de 83,2 % en poids) : 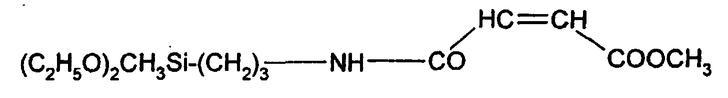
- 9,1 % molaire de motif codé D(OC₂H₅)₂ de formule CH₃ZSi(OC₂H₅)₂ appartenant au silane à fonction ester-fumaramique de formule (présent à raison de 9,2 % en poids) : 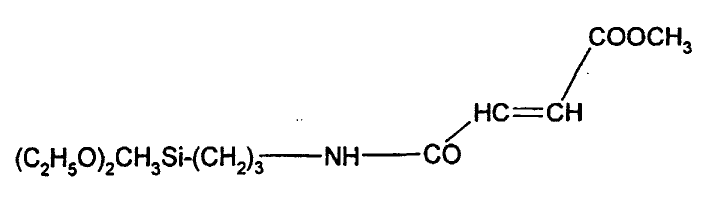
- et 9 % molaire de motifs codés D(OC₂H₅) et D de formules CH₃Z (OC₂H₅)SiO_{1/2} et CH₃ZSiO_{2/2} appartenant à l'oligomère de formule (présent à raison de 7,6 % en poids) : 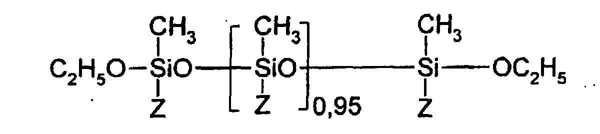
où Z = -(CH₂)₃-NH-CO-CH=CH-COOCH₃.

### EXEMPLES 2 et 3

Ces exemples ont pour but de démontrer : d'une part les performances de couplage améliorées (charge blanche-élastomères diéniques) d'un composé essentiellement constitué d'un alkoxysilane de formule (I) porteur d'une fonction ester-maléamique, utilisé seul ; et d'autre part la possibilité d'accroître ces performances de couplage améliorées en utilisant l'agent de couplage précité auquel est associé un péroxyde à titre d'initiateur radicalaire à amorçage thermique. Ces performances sont comparées à celles d'un agent de couplage conventionnel TESPT (ou tétrasulfure de bis 3-triéthoxysilylpropyl).

On compare 4 compositions d'élastomères diéniques représentatives de formulations de semelles de chaussures. Ces 4 compositions sont identiques aux différences près qui suivent :
- composition n° 1 (témoin 1) : agent de couplage TESPT (4 pce ou parties en poids pour cent parties d'élastomères) utilisé seul ;
- composition n° 2 (témoin 2) : TESPT (4 pce) auquel est associé 0,12 pce de péroxyde ;
- composition n° 3 (exemple 2) : composés essentiellement constitué d'un alkoxysilane de formule (I) consistant dans l'ester méthylique de l'acide N-[γ-propyl(méthyldiéthoxy)silane] maléamique (5,3 pce), utilisé seul ;
- composition n° 4 (exemple 3) : agent de couplage de la composition n° 3 (5,3 pce), auquel est associé 0,12 pce de péroxyde.

### 1) Constitution des compositions d'élastomères diéniques

Dans un mélangeur interne de type BRABENDER, on prépare les compositions suivantes dont la constitution, exprimée en parties en poids, est indiquée dans le tableau I donné ci-après :

**Tableau I**

| Composition | Témoin1 | Témoin 2 | Exemple 2 | Exemple 3 |
|---|---|---|---|---|
| Caoutchouc NR (1) | 85 | 85 | 85 | 85 |
| Caoutchouc BR 1220 (2) | 15 | 15 | 15 | 15 |
| Silice(3) | 50 | 50 | 50 | 50 |
| Oxyde de zinc (4) | 5 | 5 | 5 | 5 |
| Acide stéarique (5) | 2 | 2 | 2 | 2 |
| Silane TESPT (6) | 4 | 4 | -- | -- |
| Composé silane ester maléamique (7) | -- | -- | 5,3 | 5,3 |
| TBBS (8) | 2 | 2 | 2 | 2 |
| DPG (9) | 1,4 | 1,4 | 1,4 | 1,4 |
| Soufre (10) | 1,7 | 1,7 | 1,7 | 1,7 |
| Péroxyde pur (11) | -- | 0,12 | -- | 0,12 |

| | | | | |
|---|---|---|---|---|
| (1) Caoutchouc naturel, d'origine Malaisienne, commercialisé par la Société SAFICALCAN sous la référence SMR 5L ; | | | | |
| (2) Caoutchouc de polybutadiène à haut taux de produits d'addition cis-1,4, commercialisé par la Société SMPC ; | | | | |
| ù (3) Silice Zéosil 1165 MP®, commercialisé par la Société RHODIA - Silices ; | | | | |
| (4) et (5) Activateurs de vulcanisatoon ; | | | | |
| (6) Tétrasulfure de bis 3-triéthoxysilylpropyle, commercialisé par la Société DEGUSSA sous la dénomination Si-69 ; | | | | |
| (7) Composé essentiellement constitué d'un alkoxysilane à double liaison activée de formule (I) consistant dans l'ester méthylique de l'acide N-[γ-propyl-(méthyldiéthoxy)silane] maléamique, préparé comme indiqué ci-avant dans l'exemple 1) ; | | | | |
| (8) N-tertiobutyl-2-benzothiazyl-sulfénamide (accélérateur de vulcanisation) ; | | | | |
| (9) Diphényl guanidine (accélérateur de vulcanisation) ; | | | | |
| (10) Agent de vulcanisation ; | | | | |
| (11) Péroxyde de 1,1-bis(t-butyl)-3,3,5-triméthylcyclohexane, commercialisé par la Société FLEXSYS sous la dénomination Trigonox 29-40®, qui renferme 40 % en poids de péroxyde pur déposé sur un support solide de carbonate de calcium ; la quantité indiquée dans le tableau I correspond à la proportion réelle de péroxyde pris à l'état pur, c'est-à-dire sans le support carbonate de calcium. | | | | |

### 2) Préparation des compositions :

Dans un mélangeur interne de type BRABENDER, on introduit les divers constituants dans l'ordre, aux temps et aux températures indiqués ci-après :

| Temps | Température | Constituants |
|---|---|---|
| 0 minute | 90°C | Caoutchouc NR |
| 1 minute | | Caoutchouc BR |
| 2 minutes | 105°C | 2/3 silice + silane TESPT ou composé silane ester maléamique + péroxyde quand on l'utilise |
| 4 minutes | 120°C | 1/3 silice + acide stéarique + oxyde de zinc |

La vidange ou tombée du contenu du mélangeur se fait après 5 minutes. La température atteinte se situe dans l'intervalle allant de 140 à 145°C.

Le mélange obtenu est introduit ensuite sur un mélangeur à cylindres, maintenu à 30°C, et on introduit le TBBS, la DPG et le soufre. Après homogénéisation, le mélange final est calandré sous la forme de feuilles de 2,5 à 3 mm d'épaisseur.

### 3) Propriétés rhéologiques des compositions :

Les mesures sont réalisées sur les compositions à l'état cru. On a porté dans le tableau il suivant les résultats concernant le test de rhéologie qui est conduit à 160°C pendant 30 minutes à l'aide d'un rhéomètre MONSANTO 100 S.

Selon ce test la composition à tester est placée dans la chambre d'essai régulée à la température de 160°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum et le delta-couple qui reflètent le taux de réticulation entraîné par l'action du système de vulcanisation ; le temps T-90 nécessaire pour obtenir un état de vulcanisation correspondant à 90 % de la vulcanisation complète (ce temps est pris comme optimum de vulcanisation) ; et le temps de grillage TS-2 correspondant au temps nécessaire pour avoir une remontée de 2 points au dessus du couple minimum à la température considérée (160°C) et qui reflète le temps pendant lequel il est possible de mettre en oeuvre les mélanges crus à cette température sans avoir d'initiation de la vulcanisation.

Les résultats obtenus sont indiqués dans le tableau II.

**Tableau II**

| Rhéologie MONSANTO | Témoin 1 | Témoin 2 | Exemple 2 | Exemple 3 |
|---|---|---|---|---|
| Couple mini | 12,8 | 12,3 | 9,2 | 10 |
| Couple maxi | 105 | 106 | 98 | 99 |
| Delta-couple | 94,2 | 95,7 | 88,8 | 90 |
| TS-2 (minutes) | 3,5 | 3 | 2 | 1,75 |
| TS-90 (minutes) | 6,8 | 6,6 | 4 | 3,7 |

### 4) Propriétés mécaniques des vulcanisats :

Les mesures sont réalisées sur les compositions vulcanisées à l'optimum (température : 160°C ; durées pour chaque composition : temps T-90 indiqués dans le tableau II).

Les propriétés mesurées et les résultats obtenus sont rassemblés dans le tableau III suivant :

**Tableau III**

| Propriétés mécaniques | Témoin1 | Témoin 2 | Exemple 2 | Exemple 3 |
|---|---|---|---|---|
| Module 10 % (1) | 0,80 | 0,82 | 0,90 | 0,81 |
| Module 100 % (1) | 2,5 | 2,65 | 2,7 | 2,9 |
| Module 300 % (1) | 10,5 | 10,9 | 11 | 13,5 |
| Module 400 % (1) | 15,8 | 16,4 | 16,7 | 20,9 |
| Allongement à la rupture (1) | 610 | 540 | 595 | 475 |
| Résistance à la rupture (1) | 27,9 | 25 | 29 | 26 |

| Indices de renforcement : | | | | |
|---|---|---|---|---|
| M 300 % / M 100 % | 4,2 | 4,1 | 4,1 | 4,6 |
| M 400 % / M 100 % | 6,3 | 6,2 | 6,2 | 7,2 |
| Dureté Shore A (2) | 71 | 72 | 75 | 72 |
| Résistance à l'abrasion(3) | 121 | 120 | 103 | 93 |

| | | | | |
|---|---|---|---|---|
| (1) Les essais de traction sont réalisés conformément aux indications de la norme NF T 46-002 avec des éprouvettes de type H2. Les modules 10 %, 100 %, 300 %, 400 %, et la résistance à la rupture sont exprimés en MPa ; l'allongement à la rupture est exprimé en %. | | | | |
| (2) La mesure est réalisée selon les indications de la norme ASTM D 3240. La valeur donnée est mesurée à 15 secondes. | | | | |
| (3) La mesure est réalisée selon les indications de la norme NF T 46-012 en utilisant la méthode 2 avec porte éprouvette tournant. La valeur mesurée est la perte de substance (en mm³) à l'abrasion ; plus elle est faible et meilleure est la résistance à l'abrasion. | | | | |

L'examen des différents résultats des tableaux II et III conduit aux observations suivantes. Au niveau des mélanges crus, les compositions conformes à l'invention (exemples 2 et 3) présentent des couples mini bas qui traduisent une bonne dispersion de la charge silice et l'absence de grillage pendant la mise en oeuvre.

Après cuisson, les compositions conformes à l'invention (cf. exemples 2 et 3) présentent des résistances à l'abrasion qui sont significativement supérieures à celles obtenues avec les compositions couplées avec le TESPT et le péroxyde améliore significativement cette propriété. En présence de péroxyde, la composition selon l'invention (cf. exemple 3) présente les valeurs les plus élevées de module sous forte déformation (M 300, M 400) et d'indices de renforcement. Toutes ces valeurs les plus élevées en matières de résistance à l'abrasion, de module sous forte déformation et d'indice de renforcement sont les indicateurs connus de l'homme de métier d'une amélioration significative du couplage charge blanche-élastomères grâce à l' (aux) agent(s) de couplage selon l'invention, utilsé(s) seul(s) ou en association avec un activateur de couplage.

## Revendications

1. Composés constitués essentiellement d'un organosilane fonctionnalisé de formule : 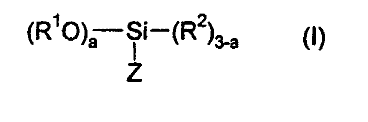 dans laquelle :
- les symboles R¹ identiques ou différents représentent chacun un groupe hydrocarboné monovalent choisi parmi : un radical alkyle, linéaire ou ramifié, ayant de 1 à 4 atomes de carbone ; un radical alkoxyalkyle, linéaire ou ramifié, ayant de 2 à 6 atomes de carbone ; un radical cycloalkyle ayant de 5 à 8 atomes de carbone ; et un radical phényle ;
- les symboles R² identiques ou différents représentent chacun un groupe hydrocarboné monovalent choisi parmi : un radical alkyle, linéaire ou ramifié, ayant de 1 à 6 atomes de carbone ; un radical cycloalkyle ayant de 5 à 8 atomes de carbone ; et un radical phényle ;
- Z est une fonction, comprenant une double liaison éthylénique activée, choisie parmi :
■ une fonction ester-maléamique Z² de formule : 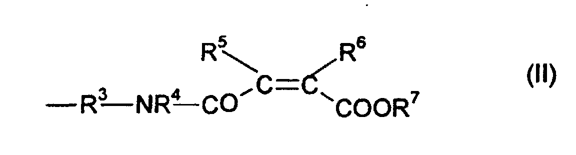
■ et une fonction ester-fumaramique Z³ de formule : 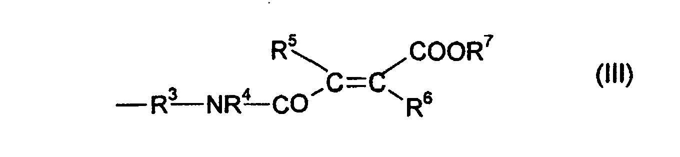
formules dans lesquelles :
+ R³ est un radical hydrocarboné divalent alkylène, linéaire ou ramifié, ayant de 1 à 10 atomes de carbone, pouvant être interrompu par au moins un hétéroatome oxygéné, dont la valence libre portée par un atome de carbone est reliée à l'atome de Si ;
+ les symboles R⁴, R⁵ et R⁶, identiques ou différents entre eux, représentent chacun un atome d'hydrogène ou un groupe hydrocarboné monovalent choisi parmi : un radical alkyle, linéaire ou ramifié, ayant de 1 à 6 atomes de carbone ; et un radical phényle ;
+ R⁷ est un groupe hydrocarboné monovalent choisi parmi : un radical alkyle, linéaire ou ramifié, ayant de 1 à 6 atomes de carbone ; et un radical phényle ;
- a est un nombre choisi parmi 1, 2 et 3.

2. Composés selon la revendication 1, **caractérisés en ce que** dans la formule (I) :
• les radicaux R¹ sont choisis parmi les radicaux : méthyle, éthyle,n-propyle, isopropyle, n-butyle, CH₃OCH₂- , CH₃OCH₂CH₂-, CH₃OCH(CH₃)CH₂- ;
• les radicaux R² sont choisis parmi les radicaux : méthyle, éthyle, n-propyle, isopropyle, n-butyle, n-pentyle, cyclohexyle et phényle ;
• les fonctions représentées par le symbole Z sont choisies parmi les fonctions de formules (II) et (III) dans lesquelles :
- le symbole R³ représente un reste alkylène qui répond aux formules suivantes : -(CH₂)₂-, -(CH₂)₃- , -(CH₂)₄- , -CH₂-CH(CH₃)- , -(CH₂)₂-CH(CH₃)-(CH₂)- , -(CH₂)₃-O-(CH₂)₃- , -(CH₂)₃-O-CH₂-CH(CH₃)-CH₂- ;
- les symboles R⁴, R⁵ et R⁶ sont choisis parmi : un atome d'hydrogène, et les radicaux méthyle, éthyle, n-propyle, n-butyle ;
- le symbole R⁷ est choisi parmi les radicaux méthyle, éthyle, n-propyle et isopropyle.

3. Composés selon la revendication 2, **caractérisés en ce que** les organosilanes fonctionnalisés répondant à la formule (I), sont ceux de formule : 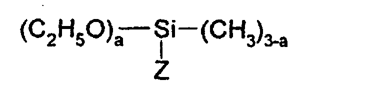 où :
- a est un nombre égal à 2 ou 3,
- le symbole Z répond aux formules (II) et (III) suivantes :

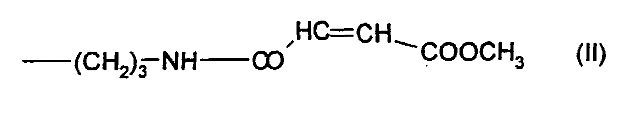

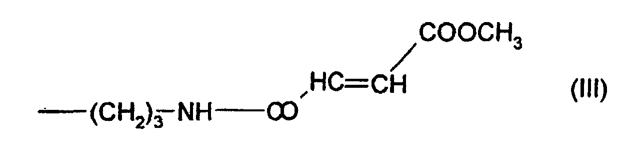

4. Composés selon l'une quelconque des revendications 1 à 3, **caractérisés en ce qu'**ils se présentent sous forme d'un organosilane fonctionnalisé de formule (I) à l'état pur ou sous forme d'un mélange de pareil organosilane avec une quantité égale ou inférieure à 40 % molaire dans le mélange, d'autre(s) composé(s) organosilicique(s) comprenant :
■ en quantité égale ou inférieure à 10 % molaire : l'organosilane fonctionnalisé de formule (I) qui est l'isomère de l'organosilane, principalement obtenu, c'est-à-dire l'organosilane trans de formule (I) où Z est la fonction Z³ de formule (III), quand l'organosilane principalement obtenu est l'organosilane cis de formule (I) où Z est la fonction Z² de formule (II) et inversement ; et/ou
■ en quantité égale ou inférieure à 30 % molaire : au moins un oligomère siloxane linéaire, cyclique et/ou en réseau formé de motifs répondant aux formules suivantes : (R⁸)₂ZSiO_{1/2} (IV-1), R⁸ZSiO_{2/2} (IV-2) et/ou ZSiO_{3/2} (IV-3), dans lesquelles : les symboles R⁸ identiques ou différents représentent chacun un radical monovalent choisi parmi le radical hydroxyle et/ou les radicaux répondant aux définitions de OR¹ et R² ; les symboles R¹, R² et Z sont tels que définis dans les revendications précédentes; et le nombre total de motifs de formules (IV-1) à (IV-3), par molécule d'oligomère, est un nombre entier ou fractionnaire supérieur à 1.

5. Procédé de préparation des composés selon l'une quelconque des revendications 1 à 4, **caractérisé en ce que** lesdits composés sont préparés par estérification du dérivé acide maléamique intermédiaire en réalisant les étapes suivantes : (1) réaction de couplage entre un silane aminé 1 et l'anhydride maléique 2, puis (2) réaction d'estérification du dérivé de l'acide maléamique formé 3 pour conduire au composé constitué essentiellement de l'organosilane fonctionnalisé souhaité 4, en appliquant le schéma de synthèse suivant : 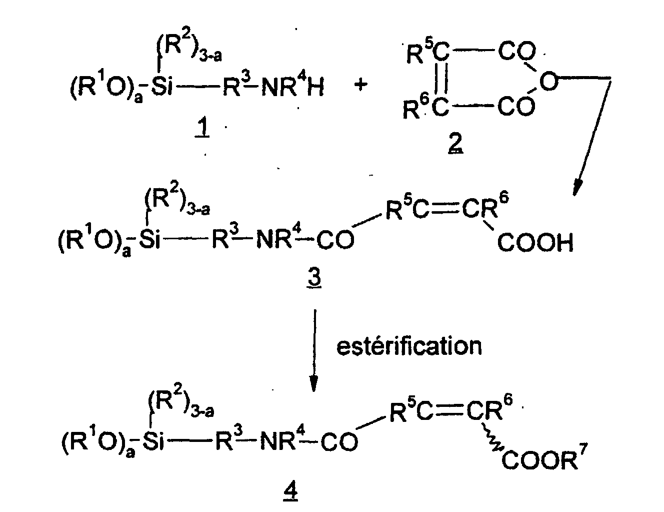 où les symboles R¹ à R⁷ et a ont les significations données ci-avant dans l'une quelconque des revendications 1 à 3.

6. Procédé de préparation des composés selon l'une quelconque des revendications 1 à 4, **caractérisé en ce que** lesdits composés sont préparés par formation d'une fonction amide en additionnant un silane aminé 1 sur un dérivé ester activé 6 obtenu à partir d'un mono-ester de l'acide maléique 5, en réalisant les étapes suivantes : (1) alcoolyse de l'anhydride maléique 2 par l'alcool R⁷-OH, (2) activation de la fonction acide carboxylique du mono-ester de l'acide maléique 5 obtenu, en utilisant les diverses méthodes d'activation décrites dans le domaine de la synthèse peptidique, pour conduire au dérivé ester activé 6, puis (3) addition du silane aminé 1 sur ledit dérivé ester activé 6 pour conduire au composé constitué essentiellement de l'organosilane fonctionalisé souhaité 4, en appliquant le schéma de synthèse suivant : 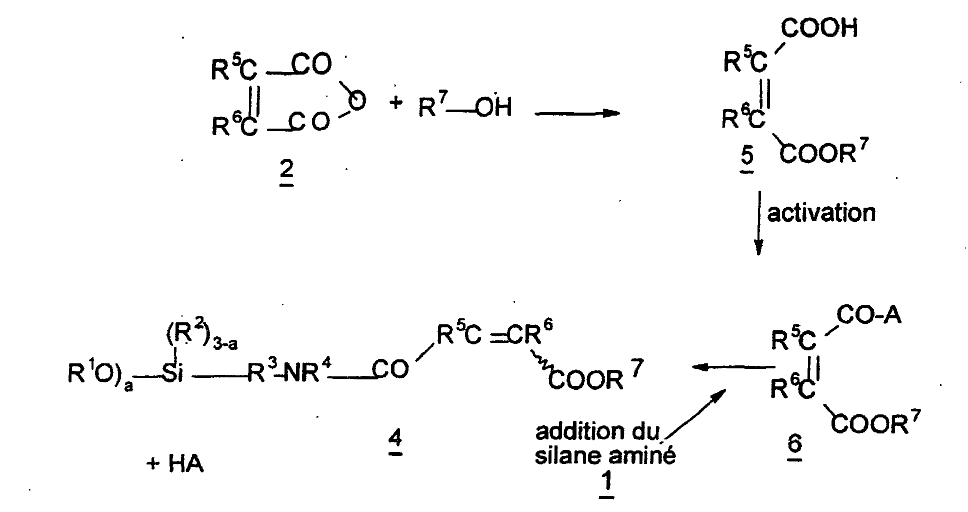 où le symbole A du dérivé 6 représente une fonction activante, et où les symboles R¹ à R⁷ et a ont les significations données ci-avant dans l'une quelconque des revendications 1 à 3.

7. Procédé selon la revendication 6, **caractérisé en ce que** l'activation de la fonction acide carboxylique du mono-ester de l'acide maléique 5 se fait en mettant en oeuvre les méthodes suivantes :
(j) activation par réaction avec un alkylchloroformiate, selon le schéma : 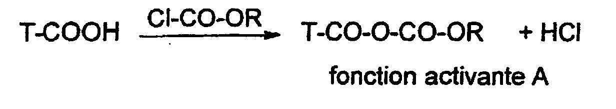 où T représente le reste -R⁵C=CR⁶-COOR⁷ et R représente un radical alkyle linéaire ayant par exemple 1 à 3 atomes de carbone ;
(2j) activation par réaction avec le dicyclohexylcarbodiimide (DCCI) en présence de N-hydroxysuccinimide (HO-SN), selon le schéma :

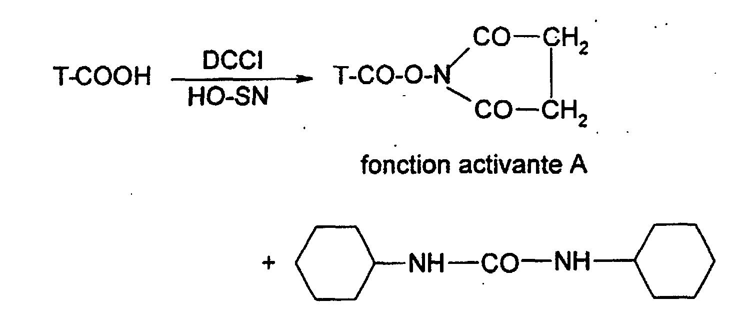

8. Utilisation d'une quantité efficace d'au moins un composé constitué essentiellement d'un organosilane fonctionnalisé de formule (I) selon l'une quelconque des revendications 1 à 4 et/ou d'au moins un composé constitué essentiellement d'un organosilane de formule (I) obtenu par le procédé selon l'une quelconque des revendications 5 à 7, comme agent de couplage charge blanche-élastomère dans les compositions d'élastomère(s) de type caoutchouc, naturel(s) ou synthétique(s), comprenant une charge blanche à titre de charge renforçante, qui sont destinées à la fabrication d'articles en élastomère(s).

9. Compositions d'élastomère(s) comprenant une charge blanche renforçante obtenues grâce à l'emploi d'une quantité efficace d'au moins un composé constitué essentiellement d'un organosilane fonctionnalisé de formule (I) selon l'une quelconque des revendications 1 à 4 et/ou d'au moins un composé constitué essentiellement d'un organosilane de formule (I) obtenu par le procédé selon l'une quelconque des revendications 5 à 7.

10. Compositions selon la revendication 9, **caractérisées en ce qu'**elles comprennent (les parties sont données en poids) :
• pour 100 parties d'élastomère(s),
• 10 à 150 parties de charge blanche renforçante,
• 0,5 à 20 parties de composé constitué essentiellement d'un organosilane de formule (I), pour 100 parties charge blanche renforçante.

11. Composition selon la revendication 10, **caractérisées en ce qu'**elles comprennent :
• pour 100 parties d'élastomère(s),
• 20 à 100 parties de charge blanche,
• 1 à 15 parties de composé constitué essentiellement d'un organosilane de formule (I), pour 100 parties charge blanche.

12. Compositions selon l'une quelconque des revendications 9 à 11, **caractérisées en ce que** la charge blanche renforçante consiste dans la silice, l'alumine ou un mélange de ces deux espèces.

13. Compositions selon la revendication 12, **caractérisées en ce que** :
• la silice est une silice de précipitation, classique ou hautement dispersible, présentant notamment une surface spécifique BET ≤ à 450 m²/g ;
• l'alumine est une alumine hautement dispersible, présentant notamment une surface spécifique BET allant de 30 à 400 m²/g et un taux élevé de fonction réactive de surface AI-OH.

14. Composition selon l'une quelconque des revendications 9 à 13, **caractérisées en ce que** le (ou les) élastomères est (sont) choisi(s) parmi :
(1) les homopolymères obtenus par polymérisation d'un monomère diène conjugué ayant de 4 à 22 atomes de carbone ;
(2) les copolymères obtenus par copolymérisation d'au moins deux des diènes conjugués précités entre eux ou par copolymérisation d'un ou plusieurs des diènes conjugués. précités avec un ou plusieurs monomères insaturés éthyléniquement choisis parmi :
- les monomères vinyles aromatiques ayant de 8 à 20 atomes de carbone ;
- les monomères nitriles vinyliques ayant de 3 à 12 atomes de carbone ;
- les monomères esters acryliques dérivés de l'acide acrylique ou de l'acide méthacrylique avec des alcanols ayant de 1 à 12 atomes de carbone ;
les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères obtenus par copolymérisation d'éthylène, avec une α-oléfine ayant de 3 à 6 atomes de carbone ;
(4) les copolymères ternaires obtenus par copolymérisation d'éthylène, d'une α-oléfine ayant 3 à 6 atomes de carbone avec un monomère diène non conjugué ayant de 6 à 12 atomes de carbone ;
(5) le caoutchouc naturel ;
(6) les copolymères obtenus par copolymérisation d'isobutène et d'isoprène (caoutchouc butyle) ainsi que les versions halogénées de ces copolymères ;
(7) un mélange de plusieurs des élastomères précités (1) à (6) entre eux ;
(8) les polyéthylènes chlorosulfonés ;
(9) les hydrocarbures fluorés ;
(10) les élastomères du type épichlorohydrine-oxyde d'éthylène ou polyépichlorohydrine.

15. Compositions selon la revendication 14, **caractérisées en ce que** l'on fait appel à un ou plusieurs élastomère(s) choisi(s) parmi : (1) le polyisoprène [ou poly(méthyl-2 butadiène-1,3)] ; (2) le poly(isoprène-butadiène), le poly(isoprène-styrène), le poly(isoprène-butadiène-styrène); (5) le caoutchouc naturel ; (6) le caoutchouc butyle ; (7) un mélange des élastomères nommément précités (1), (2), (5), (6) entre eux ; (7') un mélange contenant une quantité majoritaire (allant de 51 % à 99,5 % et, de préférence, de 70 % à 99 % en poids) de polyisoprène (1) et/ou de caoutchouc naturel (5) et une quantité minoritaire (allant de 49 % à 0,5 % et, de préférence, de 30 % à 1 % en poids) de polybutadiène, de polychloroprène, de poly(butadiène-styrène) et/ou de poly(butadiène-acrylonitrile).

16. Compositions selon l'une quelconque des revendications 9 à 15, **caractérisées en ce qu'**elles contiennent en outre au moins un activateur de couplage, apte à activer c'est-à-dire à augmenter la fonction de couplage de l'agent de couplage ; cet activateur de couplage, utilisé en très faible proportion allant de 0,05 à 1 partie pour 100 parties en poids d'élastomère(s), étant un initiateur radicalaire (encore appelé amorceur radicalaire) du type à amorçage thermique.

17. Composition selon la revendication 16, **caractérisées en ce que** le (ou les) activateur(s) de couplage est (sont) choisi(s) dans le groupe constitué par les péroxydes, les hydropéroxydes, les composés azido, les composés bis(azo), les peracides, les peresters ou un mélange de deux ou de plus de deux de ces composés.

18. Compositions selon la revendication 16 ou 17, **caractérisées en ce que** le (ou les) activateur(s) de couplage est (sont) utilisé(s) en proportion allant de 0,05 à 0,5 partie pour 100 parties d'élastomère(s).

19. Compositions selon l'une quelconque des revendications 9 à 18, caractérisées en ce 'elles contiennent en outre tout ou partie des autres constituants et additifs auxiliaires habituellement utilisés dans le domaine des compositions d'élastomère(s) et de caoutchouc(s), lesdits autres constituants et additifs comprenant :
• s'agissant du système de vulcanisation :
- des agents de vulcanisation ;
- des accélérateurs de vulcanisation ;
- des activateurs de vulcanisation ;
• s'agissant d'autre(s) additif(s) :
- une charge renforçante conventionnelle comme le noir de carbone ;
- une charge blanche conventionnelle peu ou non renforçante ;
- des agents antioxydants ;
- des agents antiozonants ;
- des agents de plastification et des agents d'aide à la mise en oeuvre.

20. Procédé de préparation des compositions d'élastomère(s) diénique(s) selon l'une quelconque des revendications 9 à 19, **caractérisé en ce que** :
• on introduit et malaxe dans un mélangeur interne usuel, en une ou deux étapes, tous les constituants nécessaires à l'exception du (ou des) agent(s) de vulcanisation et éventuellement : du (ou des) accélérateurs de vulcanisation et/ou du (ou des) activateur(s) de vulcanisation, en opérant à une température allant de 80°C à 200°C ;
• puis le mélange ainsi obtenu est repris ensuite sur un mélangeur externe et on y ajoute alors le (ou les) agent(s) de vulcanisation et éventuellement : le (ou les) accélérateur(s) de vulcanisation et/ou le (ou les) activateur(s) de vulcanisation, en opérant à une température plus basse, inférieure à 120°C.

21. Articles en élastomère(s), **caractérisés en ce qu'**ils possèdent un corps comprenant une composition selon l'une quelconque des revendications 9 à 19.

22. Articles selon la revendication 21, **caractérisés en ce qu'**ils consistent dans des supports de moteurs, des semelles de chaussures, des galets de téléphérique, des joints d'appareillages électroménagers et des gaines de câbles.

23. Produits nouveaux, pouvant entrer dans la constitution des composés constitués essentiellement d'un organosilane fonctionnalisé de formule (I) qui ont été définis ci-avant dans la revendication 4, **caractérisés en ce qu'**ils consistent dans des oligomères ou des mélanges d'oligomères siloxanes linéaires, cycliques et/ou en réseau formés de motifs répondant aux formules suivantes : (R⁸)₂ZSiO_{1/2} (VI-1), R⁸ZSiO_{2/2} (VI-2) et/ou ZSiO_{3/2} (VI-3), dans lesquelles : les symboles R⁸ identiques ou différents représentent chacun un radical monovalent choisi parmi le radical hydroxyle et/ou les radicaux répondant aux définitions de OR¹ et R² ; les symboles R¹, R² et Z sont tels que définis dans l'une quelconque des revendications 1 à 3; et le nombre total de motifs de formules (VI-1) à (VI-3), par molécule d'oligomère, est un nombre entier ou fractionnaire supérieur à 1.

## Patentansprüche

1. Verbindungen, die im wesentlichen aus einem funktionalisierten Organosilan der Formel: 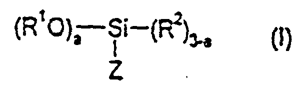 bestehen, worin
- die Symbole R¹, die gleich oder verschieden sind, jeweils eine einwertige Kohlenwasserstoffgruppe, ausgewählt aus einem linearen oder verzweigten Alkylrest mit 1 bis 4 Kohlenstoffatomen, einem linearen oder verzweigten Alkoxyalkylrest mit 2 bis 6 Kohlenstoffatomen, einem Cycloalkylrest mit 5 bis 8 Kohlenstoffatomen und einem Phenylrest, darstellen;
- die Symbole R², die gleich oder verschieden sind, jeweils eine einwertige Kohlenwasserstoffgruppe, ausgewählt aus einem linearen oder verzweigten Alkylrest mit 1 bis 6 Kohlenstoffatomen, einem Cycloalkylrest mit 5 bis 8 Kohlenstoffatomen und einem Phenylrest, darstellen;
- Z eine Funktion, die eine aktivierte ethylenische Doppelbindung umfasst, ist, ausgewählt aus:
· einer Maleinsäureesteramid-Funktion Z² der Formel: 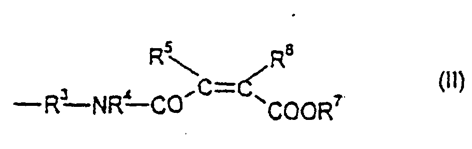
· und einer Fumarsäureesteramid-Funktion Z³ der Formel: 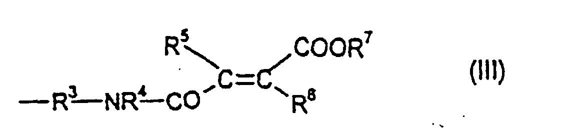
Formeln, in denen:
+ R³ ein linearer oder verzweigter, zweiwertiger Alkylen-Kohlenwasserstoffrest mit 1 bis 10 Kohlenstoffatomen ist, der durch mindestens ein Sauerstoffheteroatom unterbrochen sein kann, dessen freie Valenz, die von einem Kohlenstoff getragen wird, mit dem Si-Atom verbunden ist;
+ die Symbole R⁴, R⁵ und R⁶, die gleich oder voneinander verschieden sind, jeweils ein Wasserstoffatom oder eine einwertige Kohlenwasserstoffgruppe, ausgewählt aus einem linearen oder verzweigten Alkylrest mit 1 bis 6 Kohlenstoffatomen und einem Phenylrest, darstellen;
+ R⁷ eine einwertige Kohlenwasserstoffgruppe, ausgewählt aus einem linearen oder verzweigten Alkylrest mit 1 bis 6 Kohlenstoffatomen und einem Phenylrest, ist;
- a eine Zahl, ausgewählt unter 1, 2 und 3, ist.

2. Verbindungen nach Anspruch 1, **dadurch gekennzeichnet, dass** in der Formel (I):
· die Reste R¹ aus den Resten: Methyl, Ethyl, n-Propyl, Isopropyl, n-Butyl, CH₃OCH₂-, CH₃OCH₂CH₂-, CH₃OCH(CH₃)CH₂- ausgewählt sind;
· die Reste R² unter den Resten:. Methyl, Ethyl, n-Propyl, Isopropyl, n-Butyl, n-Pentyl, Cyclohexyl und Phenyl ausgewählt sind;
· die Funktionen, die durch das Symbol Z dargestellt werden, unter den Funktionen der Formeln (II) und (III) ausgewählt sind, in denen:
- das Symbol R³ einen Alkylenrest dargestellt, der den folgenden Formeln entspricht: -(CH₂)₂-, -(CH₂)₃-, -(CH₂)₄-, -CH₂-CH(CH₃)-, -(CH₂)₂-CH(CH₃)-(CH₂)-, -(CH₂)₃-O-(CH₂)₃-, -(CH₂)₃-O-CH₂-CH(CH₃)-CH₂-;
- die Symbole R⁴, R⁵ und R⁶ ausgewählt sind unter: einem Wasserstoffatom und den Resten Methyl, Ethyl, n-Propyl, n-Butyl;
- das Symbol R⁷ unter den Resten Methyl, Ethyl, n-Propyl und Isobutyl ausgewählt ist.

3. Zusammensetzungen nach Anspruch 2, **dadurch gekennzeichnet, dass** die funktionalisierten Organosilane, die der Formel (I) entsprechen, die der folgenden Formel sind: 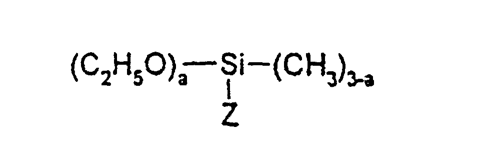 worin:
- a die Zahl 2 oder 3 ist,
- das Symbol Z den folgenden Formeln (II) und (III) entspricht:

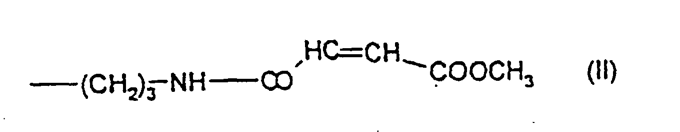

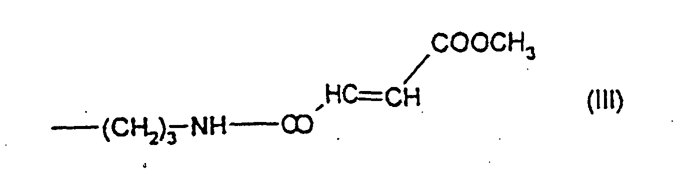

4. Verbindungen nach einem der Ansprüche 1 bis 3, **dadurch gekennzeichnet, dass** sie sich in Form eines funktionalisierten Organosilans der Formel (I) in reinem Zustand oder in Form eines Gemisches mit einem ähnlichen Organosilan in einer Menge, die 40 mol% entspricht oder weniger ist, im Gemisch mit einer anderen Organosiliciumverbindung (mit anderen Organosiliciumverbindungen) präsentieren, umfassend:
· in einer Menge von 10 mol% oder darunter: das funktionalisierte Organosilan der Formel (I), das das Isomere des Organosilans ist, das in erster Linie erhalten wird, d.h. das trans-Organosilan der Formel (I), worin Z die Funktion Z³ der Formel (III) hat, wenn das hauptsächlich erhaltene Organosilan das cis-Organosilan der Formel (I) ist, worin Z die Funkton Z² der Formel (II) hat, und umgekehrt; und/oder
· in einer Menge von 30 mol% oder weniger: mindestens ein lineares, cyclisches oder netzförmig ausgebildetes Siloxanoligomer, gebildet aus Einheiten, die den folgenden Formeln entsprechen: (R⁸)₂ZSiO_{1/2} (IV-1), R⁸ZSiO_{2/2} (IV-2) und/oder ZSiO_{3/2} (IV-3), in denen die Symbole R⁸, die gleich oder verschieden sind, jeweils einen einwertigen Rest darstellen, ausgewählt aus dem Hydroxylrest und/oder den Resten, die den Definitionen für OR¹ und R² entsprechen; die Symbole R¹, R² und Z so wie in den vorstehenden Ansprüchen definiert sind; die Gesamtzahl der Elemente der Formeln (IV-1) bis (IV-3) pro Oligomermolekül eine ganze Zahl oder eine Bruchzahl über 1 ist.

5. Verfahren zur Herstellung der Verbindungen nach einem der Ansprüche 1 bis 4, **dadurch gekennzeichnet, dass** die Verbindungen durch Veresterung des Maleinsäureamid-Zwischenproduktes unter Durchführung der folgenden Stufen hergestellt werden: (1) Kupplungsreaktion zwischen einem Aminosilan 1 und Maleinsäureanhydrid 2, dann (2) Veresterungsreaktion des gebildeten Maleinsäureamids 3 unter Erhalt der Verbindung, die im wesentlichen aus dem gewünschten funktionalisierten Organosilan 4 besteht; wobei bei der Herstellung dem folgenden Syntheseschema gefolgt wird: 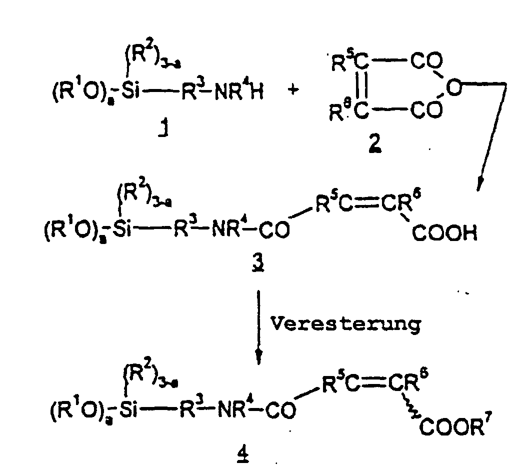 worin die Symbole R¹ bis R⁷ die Bedeutungen haben, die vorstehend in einem der Ansprüche 1 bis 3 gegeben wurden.

6. Verfahren zur Herstellung der Verbindungen nach einem der Ansprüche 1 bis 4, **dadurch gekennzeichnet, dass** die Verbindungen durch Bildung einer Amidfunktion, in dem ein Aminosilan 1 an ein aktiviertes Esterderivat 6, erhalten ausgehend von einem Monoester der Maleinsäure 5, angefügt wird, hergestellt werden, wobei die folgenden Stufen durchgeführt werden: (1) Alkoholyse des Maleinsäureanhydrids 2 durch den Alkohol R⁷-OH, (2) Aktivierung der Carbonsäurefunktion des erhaltenen Monoesters der Maleinsäure 5, in dem die verschiedenen Aktivierungsverfahren eingesetzt werden, die auf dem Gebiet der Peptidsynthese beschrieben wurden, um das aktivierte Esterderivat 6 zu erhalten, dann (3) Addition des Aminosilans 1 an das aktivierte Esterderivat 6 unter Erhalt der Verbindung, die im wesentlichen aus dem gewünschten funktionalisierten Organosilan 4 besteht, wobei das folgende Syntheseschema angewendet wurde: 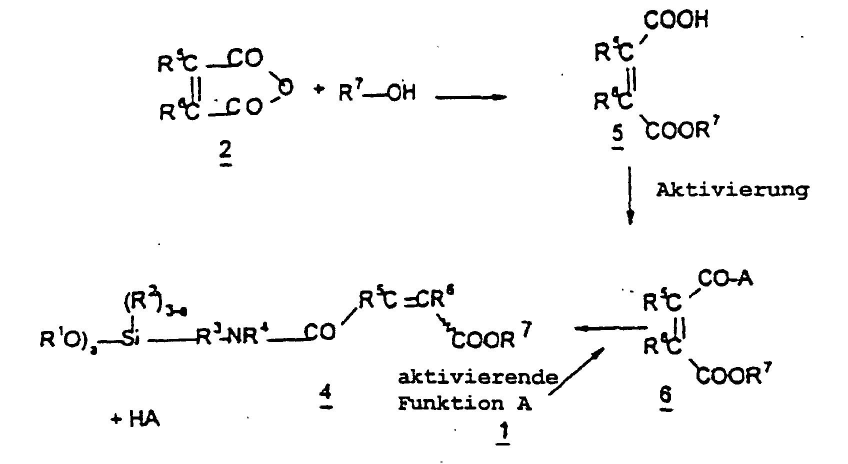 worin das Symbol A des Derivats 6 eine aktivierende Funktion darstellt, und worin die Symbole R¹ bis R⁷ die vorstehend in einem der Ansprüche 1 bis 3 gegebenen Bedeutungen besitzen.

7. Verfahren nach Anspruch 6, **dadurch gekennzeichnet, dass** die Aktivierung der Carbonsäurefunktion des Monoesters der Maleinsäure 5 durch die folgenden Verfahren durchgeführt wird:
(j) Aktivierung durch Reaktion mit einem Alkylchlorformiat nach dem Schema: 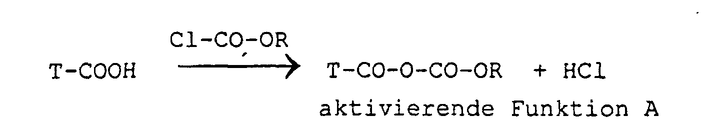 worin T den Rest -R⁵C=CR⁶-COOR⁷ darstellt und R einen linearen Alkylrest mit beispielsweise 1 bis 3 Kohlenstoffatomen darstellt;
(2j) Aktivierung durch Reaktion mit Dicyclohexylcarbodiimid (DCCl) in Gegenwart von N-Hydroxysuccinimid (HO-SN) nach dem Schema:

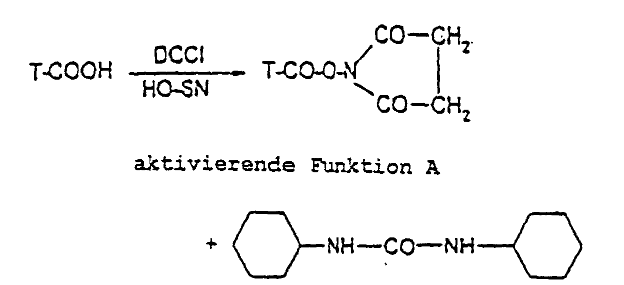

8. Verwendung einer wirksamen Menge mindestens einer Verbindung, die im wesentlichen aus einem funktionalisierten Organosilan der Formel(I) nach einem der Ansprüche 1 bis 4 und/oder mindestens einer Verbindung, die im wesentlichen aus einem Organosilan der Formel (I) besteht, die nach dem Verfahren nach einem der Ansprüche 5 bis 7 erhalten wurde, als Kopplungsmittel, weißer elastomerer Füllstoff in den Elastomerzusammensetzungen vom Typ natürlicher oder synthetischer Kautschuk, die einen weißen Füllstoff als Verstärkungsmittel umfassen und die zur Herstellung von Gegenständen aus Elastomer(en) bestimmt sind.

9. Elastomerzusammensetzungen, enthaltend ein weißes Verstärkimgsmittel, erhalten unter Verwendung einer wirksamen Menge mindestens einer Verbindung, die im wesentlichen aus einem funktionalisierten Organosilan der Formel (I) nach einem der Ansprüche 1 bis 4 besteht, und/oder mindestens einer Verbindung, die im wesentlichen aus einem Organosiloxan der Formel (I), erhalten nach dem Verfahren nach einem der Ansprüche 5 bis 7, besteht.

10. Zusammensetzungen nach Anspruch 9, **dadurch gekennzeichnet, dass** sie umfassen (die Teile sind als Gew.-Teile angegeben):
· auf 100 Teile Elastomer(e),
· 10 bis 150 Teile weißes Verstärkungsmittel,
· 0,5 bis 20 Teile Verbindung, die im wesentlichen aus einem Organosilan der Formel (I) besteht, pro 100 Teile weißes Verstärkungsmittel.

11. Zusammensetzung nach Anspruch 10, **dadurch gekennzeichnet, dass** sie umfasst:
· pro 100 Teile Elastomer(e),
· 20 bis 100 Teile weißer Füllstoff,
· 1 bis 15 Teile Verbindung, die im wesentlichen aus einem Organosilan der Formel (I) besteht, pro 100 Teile weißer Füllstoff.

12. Zusammensetzungen nach einem der Ansprüche 9 bis 11, **dadurch gekennzeichnet, dass** der weiße Füllstoff aus Siliciumdioxid, Aluminiumoxid oder einem Gemisch dieser zwei Arten besteht.

13. Zusammensetzungen nach Anspruch 12, **dadurch gekennzeichnet, dass**:
· das Siliciumdioxid ein klassisches oder hochdisperses Präzipitations-Siliciumdioxid ist, das insbesondere eine spezifische Oberfläche nach BET ≤ 450 m²/g aufweist;
· das Aluminiumoxid ein hochdisperses Aluminiumoxid ist, das insbesondere eine spezifische Oberfläche nach BET von 30 bis 400 m²/g und einen erhöhten Wert für die reaktive Funktion des Oberflächen-Al-OH aufweist.

14. Zusammensetzung nach einem der Ansprüche 9 bis 13, **dadurch gekennzeichnet, dass** das Elastomer aus folgenden ausgewählt ist/dass die Elastomeren aus folgenden ausgewählt sind:
(1) Homopolymeren, erhalten durch Polymerisation eines konjugierten Dien-Monomeren, das 4 bis 22 Kohlenstoffatome hat;
(2) Copolymeren, erhalten durch Copolymerisation von mindestens zwei der vorgenannten konjugierten Diene untereinander oder durch Copolymerisation eines oder mehrerer der vorgenannten konjugierten Diene mit einem oder mehreren ethylenisch ungesättigten Monomeren, ausgewählt unter:
- aromatischen Vinylmonomeren mit 8 bis 20 Kohlenstoffatomen;
- Vinylnitril-Monomeren mit 3 bis 12 Kohlenstoffatomen;
- Acrylester-Monomeren, abgeleitet von Acrylsäure oder Methacrylsäure mit Alkanolen, die 1 bis 12 Kohlenstoffatome haben;
die Copolymere können zwischen 99 Gew.% und 20 Gew.% Dieneinheiten und zwischen 1 Gew.% und 80 Gew.% aromatische Vinyleinheiten, Vinylnitrile und/oder Acrylester enthalten;
(3) Copolymeren, erhalten durch Copolymerisation von Ethylen mit einem α-Olefin, das 3 bis 6 Kohlenstoffatome hat;
(4) ternären Copolymeren, erhalten durch Copolymerisation von Ethylen, einem Olefin mit 3 bis 6 Kohlenstoffatomen mit einem nicht-konjugierten Dien, das 6 bis 12 Kohlenstoffatome hat;
(5) natürlichem Kautschuk;
(6) Copolymeren, erhalten durch Copolymerisation von Isobuten und Isopren (Kautschukbutyl), sowie den halogenierten Versionen dieser Copolymere;
(7) ein Gemisch mehrerer der vorgenannten Elastomeren (1) bis (6) miteinander;
(8) chlorsulfonierten Polyethylenen;
(9) fluorierten Kohlenwasserstoffen;
(10) Elastomeren des Typs Ethylen-Epichlorhydrinoxid oder Polyepichlorhydrin.

15. Zusammensetzungen nach Anspruch 14, **dadurch gekennzeichnet, dass** das eine Elastomer oder die mehreren Elastomeren ausgewählt ist/sind unter: (1) Polyisopren [oder Poly(Methyl-2-butadien-1,3)]; (2) Poly(Isopren-Butadien), Poly(Isopren-Styrol), Poly(Isopren-Butadien-Styrol; (5) Naturkautschuk; (6) Butylkautschuk; (7) einem Gemisch der vorstehend genannten Elastomeren (1), (2), (5), (6) miteinander; (7') einem Gemisch, das eine Hauptmenge (von 51 Gew.% bis 99,5 Gew.% und vorzugsweise von 70 Gew.% bis 99 Gew.%) Polyisopren (1) und/oder Naturkautschuk (5) und eine geringere Menge (von 49 Gew.% bis 0,5 Gew.% und vorzugsweise von 30 Gew.% bis 1 Gew.%) Polybutadien, Polychloropren, Poly(Butadien-Styrol) und/oder Poly(Butadien-Acrylnitril) enthält.

16. Zusammensetzungen nach einem der Ansprüche 9 bis 15, **dadurch gekennzeichnet, dass** sie darüber hinaus mindestens einen Kopplungsaktivator enthalten, der fähig ist, die Kopplungsfunktion des Kopplungsmittels zu aktivieren, d.h. zu erhöhen; wobei dieser Kopplungsaktivator, der in einem sehr schwachen Anteil von 0,05 bis 1 Gew.-Teil pro 100 Gew.-Teile Elastomer(e) verwendet wird, ein radikalischer Initiator (auch radikalische Zünder genannt) des Typs der thermischen Initiierung ist.

17. Zusammensetzung nach Anspruch 16, **dadurch gekennzeichnet, dass** der Kopplungsaktivator (die Kopplungsaktivatoren) aus der Gruppe bestehend aus Peroxiden, Hydroperoxiden, Azidoverbindungen, Bis(azo)-Verbindungen, Persäuren, Perestern oder einem Gemisch aus zwei oder mehr als zwei dieser Verbindungen, ausgewählt ist/sind.

18. Zusammensetzungen nach Anspruch 16 oder 17, **dadurch gekennzeichnet, dass** der Kopplungsaktivator (oder die Kopplungsaktivatoren) in einem Anteil von 0,05 bis 0,5 Teilen pro 100 Teile Elastomer(e) verwendet wird/werden.

19. Zusammensetzungen nach einem der Ansprüche 9 bis 18, **dadurch gekennzeichnet, dass** sie außerdem alle oder einen Teil der anderen Bestandteile und Zusatzstoffe, die üblicherweise auf dem Gebiet der Elastomerzusammensetzung(en) und des Kautschuks (der Kautschuke) verwendet werden, enthalten, wobei die anderen Bestandteile und Zusatzstoffe umfassen:
· betreffend das Vulkanisationssystem:
- Vulkanisationsmittel,
- Vulkanisationsbeschleuniger,
- Vulkanisationsaktivatoren;
· betreffend einen anderen Zusatzstoff (andere Zusatzstoffe) :
- einen herkömmlichen Füllstoff, wie z.B. Ruß,
- einen wenig oder nicht verstärkenden herkömmlichen Füllstoff;
- Antioxidationsmittel,
- Antiozonierungsmittel,
- Weichmacher und Verarbeitungshilfsmittel.

20. Verfahren zur Herstellung von Zusammensetzungen aus einem Dien-Elastomer (Dien-Elastomeren) nach einem der Ansprüche 9 bis 19, **dadurch gekennzeichnet, dass**:
· man in einen üblichen Innenmischer in ein oder zwei Stufen alle notwendigen Bestandteile, ausgenommen das Vulkanisationsmittel (die Vulkanisationsmittel) und ggf.: Vulkanisationsbeschleuniger und/oder Vulkanisationsaktivator(en) einführt und durchknetet, wobei man bei einer Temperatur von 80°C bis 200°C arbeitet;
· das so erhaltene Gemisch dann mit einem externen Mischer aufgenommen wird und dort das Vulkanisationsmittel (die Vulkanisationsmittel) und ggf.: Vulkanisationsbeschleuniger und/oder Vulkanisationsaktivator(en) zugegeben werden, wobei man bei einer tieferen Temperatur von unter 120°C arbeitet.

21. Elastomerartikel, **dadurch gekennzeichnet, dass** sie einen Körper besitzen, der eine Zusammensetzung nach einem der Ansprüche 9 bis 19 umfasst.

22. Artikel nach Anspruch 21, **dadurch gekennzeichnet, dass** sie aus Motorlagern, Schuhsohlen, Kontaktrollen einer Drahtschwebebahn, Abdichtungen von Haushaltselektrogeräten und Kabelumhüllungen bestehen.

23. Neue Produkte, die in den Aufbau der Verbindungen, die im wesentlichen aus einem funktionalisierten Organosilan der Formel (I) bestehen, eintreten können und die in Anspruch 4 definiert sind, **dadurch gekennzeichnet, dass** sie aus den Oligomeren oder den Gemischen von linearen, cyclischen und/oder vernetzten Siloxanoligomeren, gebildet aus Einheiten, die den folgenden Formeln entsprechen: (R⁸)₂ZSiO_{1/2} (VI-1), R⁸ZSiO_{2/2} (VI-2) und/oder ZSiO_{3/2} (VI-3) bestehen, worin: die Symbole R⁸, die gleich oder verschieden sind, jeweils einen einwertigen Rest darstellen, ausgewählt aus dem Hydroxylrest und/oder den Resten, die den Definitionen von OR¹ und R² entsprechen; die Symbole R¹, R² und Z wie in einem der Ansprüche 1 bis 3 definiert sind und die Gesamtzahl der Einheiten der Formeln (VI-1) bis (VI-3) pro Oligomermolekül eine ganze Zahl oder eine Bruchzahl über 1 ist.

## Claims

1. Compounds essentially consisting of a functionalized organosilane of formula: 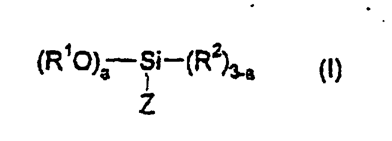 in which:
- the symbols R¹, which are identical or different, each represent a monovalent hydrocarbon group chosen from: a linear or branched alkyl radical having from 1 to 4 carbon atoms; a linear or branched alkoxyalkyl radical having from 2 to 6 carbon atoms; a cycloalkyl radical having from 5 to 8 carbon atoms; and a phenyl radical;
- the symbols R², which are identical or different, each represent a monovalent hydrocarbon group chosen from: a linear or branched alkyl radical having from 1 to 6 carbon atoms; a cycloalkyl radical having from 5 to 8 carbon atoms; and a phenyl radical;
- Z is a functional group, comprising an activated ethylenic double bond, chosen from:
■ a maleamic ester functional group Z² of formula: 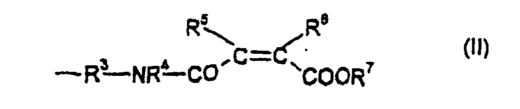
■ and a fumaramic ester functional group Z³ of formula: 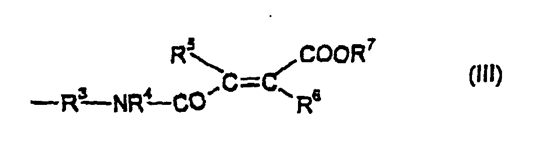
in which formulae:
+ R³ is a divalent, linear or branched, alkylene hydrocarbon radical having from 1 to 10 carbon atoms, possibly interrupted by at least one oxygen-substituted heteroatom whose free valence carried by a carbon atom is linked to the Si atom;
+ the symbols R⁴, R⁵ and R⁶, which are identical to or different from one another, each represent a hydrogen atom or a monovalent hydrocarbon group chosen from: a linear or branched alkyl radical having from 1 to 6 carbon atoms; and a phenyl radical;
+ R⁷ is a monovalent hydrocarbon group chosen from: a linear or branched alkyl radical having from 1 to 6 carbon atoms; and a phenyl radical;
- a is a number chosen from 1, 2 and 3.

2. Compounds according to claim 1, **characterized in that**, in formula (I):
• the radicals R¹ are chosen from the radicals: methyl, ethyl, n-propyl, isopropyl, n-butyl, CH₃OCH₂-, CH₃OCH₂CH₂- and CH₃OCH(CH₃)CH₂-;
• the radicals R² are chosen from the radicals: methyl, ethyl, n-propyl, isopropyl, n-butyl, n-pentyl, cyclohexyl and phenyl;
• the functional groups represented by the symbol Z are chosen from the functional groups of formulae (II) and (III), in which:
- the symbol R³ represents an alkylene residue which satisfies the following formulae: -(CH₂)₂-, -(CH₂)₃-, - (CH₂)₄-, -CH₂-CH(CH₃)-, -(CH₂)₂-CH(CH₃)-(CH₂)-, - (CH₂)₃-O-(CH₂)₃- and -(CH₂)₃-O-CH₂-CH(CH₃)-CH₂-;
- the symbols R⁴, R⁵ and R⁶ are chosen from: a hydrogen atom, and methyl, ethyl, n-propyl and n-butyl radicals;
- the symbol R⁷ is chosen from methyl, ethyl, n-propyl and isopropyl radicals.

3. Compounds according to claim 2, **characterized in that** the functionalized organosilanes satisfying formula (I) are those of formula: 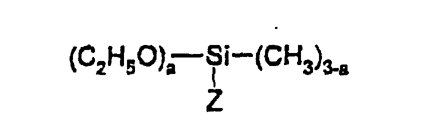 where:
- a is a number equal to 2 or 3,
- the symbol Z satisfies the following formulae (II) and (III):

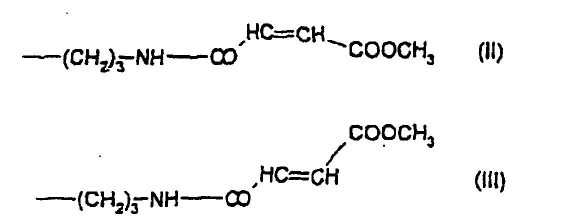

4. Compounds according to any one of claims 1 to 3, **characterized in that** they are in the form of a functionalized organosilane of formula (I) in the pure state or in the form of a mixture of a like organosilane with an amount less than or equal to 40 mol% in the mixture of one or more other organosiliceous compounds, comprising:
■ in an amount less than or equal to 10 mol%: the functionalized organosilane of formula (I) which is the isomer of the organosilane essentially obtained, that is to say the trans organosilane of formula (I) where Z is the functional group Z³ of formula (III), when the organosilane essentially obtained is the cis organosilane of formula (I) where Z is the functional group Z² of formula (II), and vice versa; and/or
■ in an amount equal to or less than 30 mol%: at least one linear, cyclic and/or networked siloxane oligomer formed from units satisfying the following formulae: (R⁸)₂ZSiO_{1/2} (IV-1), R⁸ZSiO_{2/2} (IV-2) and/or ZSiO_{3/2} (IV-3), in which: the symbols R⁸, which are identical or different, each represent a monovalent radical chosen from the hydroxyl radical and/or the radicals satisfying the definitions of OR¹ and R²; the symbols R¹, R² and Z are as defined in the preceding claims; and the total number of units of formulae (IV-1) to (IV-3), per oligomer molecule, is an integer or fractional number greater than 1.

5. Process for the preparation of the compounds according to any one of claims 1 to 4, **characterized in that** the said compounds are prepared by the esterification of the intermediate maleamic acid derivative by carrying out the following steps: (1) the reaction of coupling between an aminosilane 1 and the maleamic anhydride 2, and then (2) the reaction of esterification of the maleamic acid derivative formed 3 so as to result in the compound essentially consisting of the desired functionalized organosilane 4, by applying the following synthesis scheme: 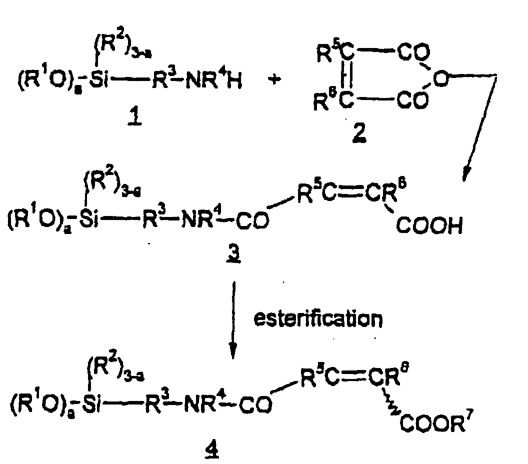 where the symbols R¹ to R⁷ and a have the meanings given above in any one of claims 1 to 3.

6. Process for the. preparation of the compounds according to any one of claims 1 to 4, **characterized in that** the said compounds are prepared by forming an amide functional group by adding an aminosilane 1 to an activated ester derivative 6 obtained from a maleic acid monoester 5, by carrying out the following steps: (1) alcoholysis of the maleic anhydride 2 by the alcohol R⁷-OH, (2) activation of the carboxylic acid functional group of the maleic acid monoester 5 obtained, using the various activation methods described in the peptide synthesis field, in order to result in the activated ester derivative 6, and then (3) the addition of the aminosilane 1 to the said activated ester derivative 6 in order to result in the compound essentially consisting of the desired functionalized organosilane 4, by applying the following synthesis scheme: 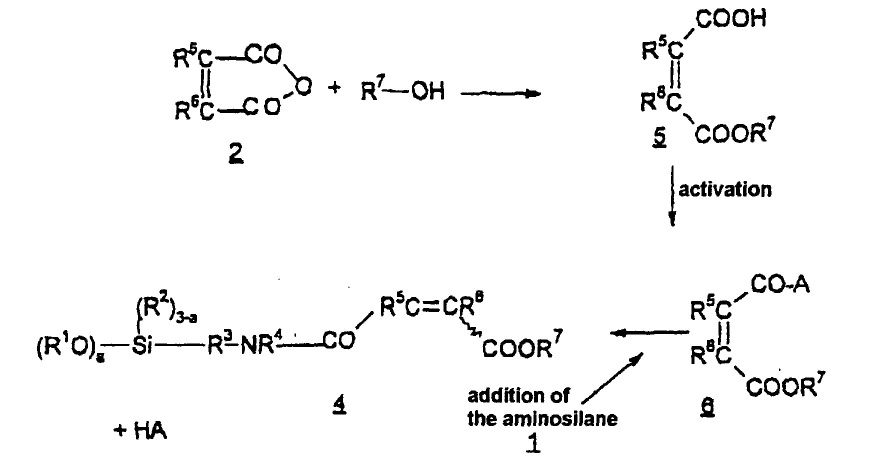 where the symbol A of the derivative 6 represents an activating functional group and where the symbols R¹ to R⁷ and a have the meanings given above in any one of claims 1 to 3.

7. Process according to claim 6, **characterized in that** the activation of the carboxylic acid functional group of the maleic acid monoester 5 is carried out by using the following methods:
(j) activation by the reaction with an alkylchloroformate, according to the scheme: 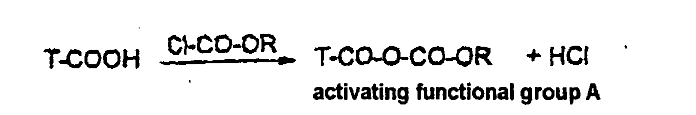 where T represents the -R⁵C=CR⁶-COOR⁷ residue and R represents a linear alkyl radical having, for example, 1 to 3 carbon atoms;
(2j) activation by the reaction with dicyclohexylcarbodiimide (DCCI), in the presence of N-hydroxysuccinimide (HO-SN), according to the scheme:

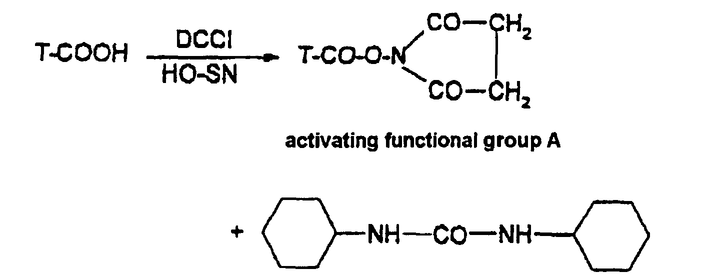

8. Use of an effective amount of at least one compound essentially consisting of a functionalized organosilane of formula (I) according to any one of claims 1 to 4 and/or of at least one compound essentially consisting of an organosilane of formula (I) obtained by the process according to any one of claims 5 to 7, as a white-filler/elastomer coupling agent in the natural or synthetic rubber-type elastomer compositions, comprising a white filler as reinforcing filler, which compositions are intended for the manufacture of elastomer articles.

9. Elastomer compositions comprising a reinforcing white filler, these being obtained by using an effective amount of at least one compound essentially consisting of a functionalized organosilane of formula (I) according to any one of claims 1 to 4 and/or of at least one compound essentially consisting of an organosilane of formula (I) obtained by the process according to any one of claims 5 to 7.

10. Compositions according to claim 9, **characterized in that** they comprise (the parts are given by weight):
• per 100 parts of elastomer(s),
• 10 to 150 parts of reinforcing white filler,
• 0.5 to 20 parts of compound essentially consisting of an organosilane of formula (I), per 100 parts of reinforcing white filler.

11. Compositions according to claim 10, **characterized in that** they comprise:
• per 100 parts of elastomer(s),
• 20 to 100 parts of white filler,
• 1 to 15 parts of compound essentially consisting of an organosilane of formula (I), per 100 parts of white filler.

12. Compositions according to any one of claims 9 to 11, **characterized in that** the reinforcing white filler consists of silica, alumina or a mixture of these two species.

13. Compositions according to claim 12, **characterized in that**:
• the silica is a conventional or highly dispersible precipitated silica, especially having a BET specific surface area ≤ 450 m²/g;
• the alumina is a highly dispersible alumina, especially having a BET specific surface area ranging from 30 to 400 m²/g and a high content of Al-OH reactive functional groups on the surface.

14. Compositions according to any one of claims 9 to 13, **characterized in that** the elastomer(s) is (are) chosen from:
(1) homopolymers obtained by the polymerization of a conjugated diene monomer having from 4 to 22 carbon atoms;
(2) copolymers obtained by the mutual copolymerization of at least two of the aforementioned conjugated dienes or by the copolymerization of one or more of the aforementioned conjugated dienes with one or more ethylenically unsaturated monomers chosen from:
- aromatic vinyl monomers having from 8 to 20 carbon atoms;
- vinyl nitrile monomers having from 3 to 12 carbon atoms;
- acrylic ester monomers derived from acrylic acid or methacrylic acid with alkanols having from 1 to 12 carbon atoms;
the copolymers may contain between 99% and 20% by weight of diene units and between 1% and 80% by weight of aromatic vinyl, vinyl nitrile and/or acrylic ester units;
(3) copolymers obtained by the copolymerization of ethylene with an α-olefin having from 3 to 6 carbon atoms;
(4) ternary copolymers obtained by the copolymerization of ethylene, an α-olefin having 3 to 6 carbon atoms with an unconjugated diene monomer having from 6 to 12 carbon atoms;
(5) natural rubber;
(6) copolymers obtained by the copolymerization of isobutene and isoprene (butyl rubber) and the halogenated versions of these copolymers;
(7) a blend of several of the aforementioned elastomers (1) to (6) together;
(8) chlorosulphonated polyethylenes;
(9) fluorinated hydrocarbons;
(10) elastomers of the epichlorohydrin/ethylene oxide type or polyepichlorohydrin.

15. Compositions according to claim 14, **characterized in that** use is made of one or more elastomers chosen from: (1) polyisoprene [or poly(2-methyl-1,3-butadiene)]; (2) poly(isoprene-butadiene), poly(isoprene-styrene), poly(isoprene-butadiene-styrene); (5) natural rubber; (6) butyl rubber; (7) a blend of the abovenamed elastomers (1), (2), (5), (6) together; (7') a blend containing a majority amount (ranging from 51% to 99.5% and, preferably, from 70% to 99% by weight) of polyisoprene (1) and/or of natural rubber (5) and a minority amount (ranging from 49% to 0.5% and, preferably, from 30% to 1% by weight) of polybutadiene, polychloroprene, poly(butadiene-styrene) and/or poly(butadiene-acrylonitrile).

16. Compositions according to any one of claims 9 to 15, **characterized in that** they furthermore contain at least one coupling activator capable of activating, that is to say of increasing, the coupling function of the coupling agent; this coupling activator, used in a very small amount ranging from 0.05 to 1 part per 100 parts by weight of elastomer(s), being a radical initiator of the thermally initiated type.

17. Compositions according to claim 16, **characterized in that** the coupling activator(s) .is(are) chosen from the group consisting of peroxides, hydroperoxides, azido compounds, bis(azo) compounds, peracids, peresters or a mixture of two or of more than two of these compounds.

18. Compositions according to claim 16 or 17, **characterized in that** the coupling activator(s) is(are) used in proportions ranging from 0.05 to 0.5 part per 100 parts of elastomer(s).

19. Compositions according to any one of claims 9 to 18, **characterized in that** they furthermore contain all or some of the other constituents and auxiliary additives normally used in the field of elastomer and rubber compositions, the said other constituents and additives comprising:
• with regard to the vulcanization system:
- vulcanization agents;
- vulcanization accelerators;
- vulcanization activators;
• with regard to other additive(s):
- a conventional reinforcing filler such as carbon black;
- a barely reinforcing or non-reinforcing conventional white filler;
- antioxidants;
- antiozonants;
- plasticizers and processing aids.

20. Process for the preparation of diene elastomer compositions according to any one of claims 9 to 19, **characterized in that**:
• all the necessary constituents, with the exception of the vulcanization agent(s) and, possibly, the vulcanization accelerator(s) and/or the vulcanization activator(s), are introduced into and mixed in a standard internal mixer, in one or two steps, at a temperature ranging from 80°C to 200°C;
• then the mixture thus obtained is mixed further on an external mixer and the vulcanization agent(s) and, possibly, the vulcanization accelerator(s) and/or the vulcanization'activator(s) are then added thereto, at a lower temperature, below 120°C.

21. Elastomer articles, **characterized in that** they have a body comprising a composition according to any one of claims 9 to 19.

22. Articles according to Claim 21, **characterized in that** they consist of engine mounts, shoe soles, cable-car wheels, seals for domestic electrical appliances and cable jackets.

23. Novel products, which can be used in the formulation of the compounds essentially consisting of a functionalized organosilane of formula (I), which have been defined above in claim 4, **characterized in that** they consist of linear, cyclic and/or networked siloxane oligomers or mixtures of such oligomers formed from units satisfying the following formulae: (R⁸)₂ZSiO_{1/2}(IV-1), R⁸ZSiO_{2/2} (IV-2) and/or ZSiO_{3/2} (IV-3) in which: the symbols R⁸, which are identical or different, each represent a monovalent radical chosen from the hydroxyl radical and/or the radicals satisfying the definitions of OR¹ and R²; the symbols R¹, R² and Z are as defined in any one of claims 1 to 3; and the total number of units of formulae (IV-1) to (IV-3), per oligomer molecule, is an integer or fractional number greater than 1.
